**Europäisches Patentamt**

(19) **European Patent Office**

**Office européen des brevets**

(11) Veröffentlichungsnummer: **0 104 638**

**B1**

(12) **EUROPÄISCHE PATENTSCHRIFT**

(45) Veröffentlichungstag der Patentschrift:
10.06.87

(21) Anmeldenummer: **83109578.1**

(22) Anmeldetag: **26.09.83**

(51) Int. Cl.⁴: **G 06 F 13/36**

(54) **Verfahren zur Vorbereitung der Anschaltung einer von mehreren datenverarbeitenden Einrichtungen an ein zentral taktgesteuertes Mehrfach-Leitungssystem.**

(30) Priorität: **27.09.82 DE 3235739**

(43) Veröffentlichungstag der Anmeldung:
**04.04.84 Patentblatt 84/14**

(45) Bekanntmachung des Hinweises auf die Patenterteilung:
**10.06.87 Patentblatt 87/24**

(84) Benannte Vertragsstaaten:
**CH DE FR GB IT LI NL SE**

(56) Entgegenhaltungen:
**EP-A-0 083 283**
**FR-A-2 500 697**
**US-A-4 290 102**

**IBM TECHNICAL DISCLOSURE BULLETIN Volume 23, No.7A, Dezember 1980, New York (US); BANTZ et al. "Asynchronous contention resolution", Seiten 3043 und 3044**

(73) Patentinhaber: **Nixdorf Computer Aktiengesellschaft, Fürstenallee 7, D-4790 Paderborn (DE)**

(72) Erfinder: **Eisenack, Joachim, Riemekestrasse 18, D-4790 Paderborn (DE)**

(74) Vertreter: **Patentanwälte Schaumburg & Thoenes, Mauerkircherstrasse 31 Postfach 86 07 48, D-8000 München 80 (DE)**

## Beschreibung

Die Erfindung betrifft ein Verfahren zur Vorbereitung der Anschaltung einer von mehreren datenverarbeitenden Einrichtungen an ein zentral taktgesteuertes Mehrfach-Leitungssystem (Bus) zwecks Übertragung von Informationssignalen zwischen den datenverarbeitenden Einrichtungen, bei dem die Einrichtungen mit Anschalteerfordernis Anfragesignale über das Mehrfach-Leitungssystem an mindestens eine Zuordnungseinrichtung (Schiedsrichter) abgeben und diese mittels von ihr erzeugter Zuordnungssignale die Anschaltung einer der Einrichtungen mit Anschalteerfordernis an das Mehrfach-Leitungssystem veranlaßt, wonach diese Einrichtung Informationssignale zu einer anderen Einrichtung überträgt, und bei dem die Zuordnungseinrichtung während der Übertragung von Informationssignalen die Zuordnungssignale erzeugt.

Ein Verfahren dieser art (siehe z.B. Fall Joint Computer Conference, 1972, S. 719 bis 732) wird durchgeführt, wenn mehrere datenverarbeitende Einrichtungen über ein einziges Mehrfach-Leitungssystem verbunden werden sollen. Handelt es sich bei den datenverarbeitenden Einrichtungen um Prozessoren, so wird ein solches System auch als Multi-Prozessor-System bezeichnet. Um die folgende Beschreibung zu vereinfachen, wird eine an ein Mehrfach-Leitungssystem anschaltbare datenverarbeitende Einrichtung deshalb als Prozessor bezeichnet, obwohl die Anschaltung auch anderer Arten datenverarbeitender Einrichtungen denkbar ist. Ferner wird das Mehrfach-Leitungssystem in Übereinstimmung mit der dem Fachmann geläufigen Terminologie im folgenden als "Bus" bezeichnet.

Innerhalb eines mit einem solchen Bus aufgebauten Systems werden die einzelnen Prozessoren bzw. sonstige datenverarbeitende Geräte, die mit anderen Prozessoren Verbindung aufnehmen sollen, zeitlich nacheinander an den Bus angeschaltet. Die Reihenfolge dieser Anschaltung bestimmen eine zentrale oder mehrere dezentrale Zuordnungseinrichtungen (Schiedsrichter), die nach einem in ihnen gespeicherten Algorithmus arbeiten. Wenn ein Prozessor an den Bus anzuschalten ist, um mit einem anderen Prozessor oder mit einem globalen Speicher des Systems in Verbindung zu treten, so gibt er über den Bus ein Anfragesignal ab, wodurch die zentrale bzw. eine dezentrale Zuordnungseinrichtung veranlaßt wird, gemäß dem in ihr gespeicherten Algorithmus den Bus dem anfragenden Prozessor zuzuordnen, so daß dieser dann mit dem Bus verbunden werden kann. Wenn mehrere Prozessoren ein Anfragesignal übermitteln, so bewirkt der Zuordnungsalgorithmus die Auswahl eines der anfragenden Prozessoren, dem der Bus dann zugeordnet wird, so daß er ihn belegen kann.

Während der Belegung kann der jeweilige Prozessor über den Bus mit anderen Prozessoren bzw. datenverarbeitenden Einrichtungen wie Speichern oder Ein-Ausgabegeräten beliebig korrespondieren und Informationssignale austauschen. Um die Anzahl der Signalleitungen des Bus möglichst gering zu halten, werden während einer solchen Verbindung Adressensignale und Datensignale zeitlich nacheinander über dieselben Signalleitungen übermittelt. Dabei wird eine Markierung dahingehend vorgenommen, ob die jeweils übermittelten Informationssignale Adressensignale oder Datensignale sind, was durch Markierungssignale geschieht, die über weitere Signalleitungen des Bus parallel zu den Adressen- bzw. Datensignalen übermittelt werden. Da solche Markierungssignale den Typ der jeweils übertragenen Informationssignale kennzeichnen, werden sie im folgenden als Informationstypsignale bezeichnet. Die Adressen- oder Datensignale werden im Unterschied dazu als Informationswertsignale bezeichnet.

Die Signalübertragung auf dem Bus kann abhängig von Taktsignalen eines zentralen Bustakt-Generators durchgeführt werden. Dies erleichtert das Einhalten der zeitlich richtigen Folge der übertragenen Signale und ermöglicht eine zeitliche Kennzeichnung der Gültigkeit der Informationstypsignale und der Informationswertsignale. Außerdem wird durch den Bustakt die Arbeitsweise der Zuordnung gesteuert, da durch diese der Bus zeitlich · nacheinander mehreren Prozessoren zugeordnet werden soll.

Ein System der vorstehend beschriebenen Art benötigt eine relativ große Anzahl an Bus-Signalleitungen. Obwohl zur Übertragung der Adressensignale und der Datensignale bereits dieselben Signalleitungen ausgenutzt werden, benötigt man doch für die vorstehend erläuterten weiteren Funktionen der Markierung, der Zuordnung, der Bus-Taktsteuerung sowie zur Adressierung beim Verbindungsaufbau zwischen den einzelnen Prozessoren weitere Signalleitungen, die lediglich Steuerzwecke erfüllen, nicht aber zur eigentlichen Informationssignalübertragung ausgenutzt werden können. Verringert man die Zahl der Signalleitungen, so verringert sich auch die Arbeitsgeschwindigkeit des Systems.

Es ist Aufgate der Erfindung, eine Möglichkeit zur wirtschaftlicheren Ausnutzung der verfügbaren Signalleitungen eines Mehrfach-Leitungssystems anzugeben, durch die die Zahl der benötigten Signalleitungen unter weitgehender Beibehaltung der Arbeitsgeschwindigkeit verringert werden kann.

Diese Aufgabe wird für ein Verfahren eingangs genannter Art dadurch gelöst, daß die Anfragesignale während einer bereits bestehenden Verbindung in solchen Zeitabschnitten übertragen werden, in denen über das Mehrfach-Leitungssystem keine Informationssignale übertragen werden auf Grund von Lese- und/oder Schreibvorgängen in Speichern der datenverarbeitenden Einrichtungen, und daß die Zuordnungssignale in Zeitabschnitten dieser Art und/oder während der Übertragung gelesener Informationssignale erzeugt werden.

Die gemäß der Erfindung vorgesehene Art des Transports der Anfragesignale und der Erzeugung der Zuordnungssignale während einer bereits bestehenden Verbindung bedeutet, daß die Bus-Signalleitungen mehrfach genutzt werden können. Dadurch ist es möglich, Signalleitungen einzusparen, denn die Anfragesignale und ggf. die Zuordnungssignale können über dieselben Leitungen übertragen werden.

Wesentliche Erkenntnis dabei ist, daß die für Informationswertsignale benutzten Signalleitungen keine Informationswertsignale transportieren müssen, wenn in der jeweils mit dem Bus verbundenen datenverarbeitenden Einrichtung eine Signalverarbeitung mit einer unvermeidbaren Zeitverzögerung erfolgt. Ein solcher Zeitabschnitt ist die Zugriffzeit, die eine Speichervorrichtung benötigt, um nach Adreßangabe einer Speicherzelle die gespeicherte Information auszugeben. Es handelt sich dabei also um eine Zeitverzögerung, die bei einem Lesezugriff zwischen der Adreßübertragung für eine Speichervorrichtung und der Übertragung des Datums der adressierten Speicherzelle liegt. Während dieser Zeit können die Signalleitungen, die normalerweise zur Übertragung von Informationswertsignalen benutzt werden, zur Übertragung von Anfragesignalen und ggf. Zuordnungssignalen dienen. Wenn während eines solchen Lesezugriffs weitere datenverarbeitende Einrichtungen bzw. Prozessoren, die in den Bus anzuschalten sind, ein Anfragesignal über den Bus zu einem Schiedsrichter abgeben, so kann diese Signalübermittlung in die Zugriffzeit gelegt werden. Es werden dann also Informationswertsignale verschiedener Art zu unterschiedlichen Zeiten über dieselben Signalleitungen übertragen, so daß für diesen Vorgang der Anfrage keine zusätzlichen Signalleitungen erforderlich sind.

Als Zeitabschnitt, in dem keine Informatiomssignale zwischen an den Bus angeschalteten Prozessoren übertragen werden, kommt auch die Schreibzeit beim Schreibzugriff zu einer Speichervorrichtung in Betracht. Die Schreibzeit ist diejenige Zeit, die eine Speichervorrichtung benötigt, um nach Adressangabe einer Speicherzelle eine Information in diese einzuschreiben.

Da auf den Empfang der Anfragesignale in einem Schiedsrichter unmittelbar die Erzeugung der Zuordnungssignale folgt, fällt diese Erzeugung in einen Zeitraum, in dem entweder ein Lese- oder Schreibvorgang noch abläuft oder nach einem Lesevorgang gelesene Informationssignale über den Bus übertragen werden. Trotz der möglichen Verringerung der Zahl erforderlicher Signalleitungen wird daher kein zusätzlicher Aufwand an Arbeitszeit verursacht, denn die Zuordnungssignale werden in einer Zeit erzeugt, in der andere Vorgänge ablaufen, nämlich ein Speicherzugriff und/oder die anschließende Übertragung gelesener Informationssignale.

Gemäß einer Weiterbildung der Erfindung werden die Anfragesignale und ggf. die Zuordnungssignale über der jeweils anfragenden Einrichtung fest zugeteilte Signalleitungen des Mehrfach-Leitungssystems übertragen. Hierdurch wird erreicht, daß ein besonderer Aufwand für Adressendecodierung entfällt. Die feste Zuteilung von Signalleitungen ist im Hinblick auf die beschriebenen informationssignalübertragungsfreien Zeitabschnitte möglich.

Die feste Zuteilung von Signalleitungen für die Übertragung von Anfragesignalen bzw. Zuordnungssignalen zu den einzelnen Prozessoren bedingt schaltungstechnische Maßnahmen, die vorteilhaft auch zu anderen Zeitabschnitten ausgenutzt werden können, um über die fest zugeteilten Signalleitungen Informationssignale zu übertragen, die der direkten Ansteuerung eines bestimmten Prozessors dienen. Solche Signale sind insbesondere Adressensignale. Solche Adressensignale können infolge der festen Zuteilung der Signalleitungen auch an mehrere Prozessoren gleichzeitig übertragen werden. Eine Variation der Art solchermaßen übertragener Adressen ist dann mit äußerst geringem zusätzlichem Aufwand an Signalleitungen möglich, denn jeweils eine zusätzliche Signalleitung kann dann als Informationstyp-Signalleitung verwendet werden, um die Art der auf den fest zugeteilten Leitungen übertragenen Adresse zu kennzeichnen. So ist es beispielsweise möglich, nach diesem Prinzip direkt, d.h. ohne zusätzlichen Dekodierungsaufwand, einen oder mehrere Prozessoren selektiv zu löschen, in einen sogenannten Interrupt-Betrieb zu steuern oder ihnen bestimmte Betriebsmittel zuzuordnen und gegebenenfalls freizugeben.

Eine vorteilhafte Weiterbildung des erfindungsgemüßen Verfahrens besteht darin, daß während eines Lesevorgangs ein die Zugriffzeit des betreffenden Speichers angebendes Statussignal erzeugt wird, das als Bedingung für die Übertragung der Anfragesignale verwendbar ist. Hierdurch wird erreicht, daß ein an den Bus anzuschaltender Prozessor seine Anfragesignale auch schon während eines bereits laufenden Speicherzugriffs auf den Bus abgeben kann und hierzu nicht etwadas Ende dieses Zugriffs bzw. der Beginn eines neuen abzuwarten ist. Damit ist eine weitere Verringerung des Zeitaufwandes möglich, der für die Vorbereitung der Anschaltung eines Prozessors an den Bus erforderlich ist.

Je nach Art der in Verbindung mit dem Mehrfach-Leitungssystem verwendeten Speichereinrichtungen kann deren Zugriffzeit sehr kurz sein, was bedeutet, daß die Übertragung der Anfragesignale in einen entsprechend kurzen Zeitabschnitt einzuordnen ist. Damit wird gleichzeitig mehr Arbeitszeit für die Erzeugung der Zuordnungssignale im Schiedsrichter verfügbar. Das erfindungsgemäße Verfahren kann hierbei derart weiter ausgebildet sein, daß die Periodendauer der zentralen Taktsignale der Übertragungszeit über das Mehrfach-Leitungssystem entspricht, daß die übertragenen Anfragesignale in synchron ladbare, einflankengesteuerte Empfangsregister eingegeben werden, daß die Flanken der Taktsignale diese Eingabe bestimmen und daß die Steuersignale für diese Eingabe auf die Ladeeingänge der Empfangsregister geführt werden.

Diese Weiterbindung der Erfindung ermöglicht eine sehr genaue Definition des Zeitpunktes, zu dem die Empfangsregister die über den Bus übertragenen Anfragesignale übernehmen. Durch die Flankensteuerung der Empfangsregister mit den Taktsignalen in Verbindung mit der genannten Bemessung ihrer Periodendauer wird erreicht, daß beispielsweise mit der einen aktiven Taktsignalflanke der Sendevorgang ausgelöst und bereits mit der nächstfolgenden aktiven Taktsignalflanke der Empfangsvorgang in einem Empfangsregister veranlaßt werden kann. Gleichzeitig ist aber damit, daß die Steuersignale zur Eingabe empfangener Anfragesignile in die Empfangsregister auf deren Ladeeingänge geführt sind, der Vorteil verbunden, daß diese Steuersignale wie Informationssignale behandelt werden können und deshalb keine hohe Flankensteilheit besitzen müssen. Dies ist dann nur noch für die Taktsignale zu fordern, so daß in einem Mehrfach-Leitungssystem nur die Taktsignalleitungen als abgeschlossene Leitungen mit starken Treiberverstärkern zu betreiben sind, während für die übrigen Signalleitungen ein korrekter Leitungsabschluß nicht erforderlich ist und relativ schwache Signaltreiberverstärker verwendet werden können. Dieses Prinzip der ungleichartigen Behandlung der Signalleitungen eines Mehrfach-Leitungssystems hat auch eine eigenständige Bedeutung und kann auch für die Übertragung anderer Steuer-bzw. Informationssignale als der Anfragesignale oder der Zuordnungssignale Anwendung finden, wie noch beschrieben wird.

Darüber hinaus ist der weitere Vorteil gegeben, daß die beschriebene Art des Einsatzes dei einflankengesteuerten und synchron ladbaren Empfangsregister sehr einfach abzuwickeln ist, da ihre Eingangssignale nur für sehr kurze Zeit stabil anstehen müssen, um Schaltvorgänge in ihnen auszulösen.

Die Erfindung wird im folgenden an Hand der Figuren weiter erläutert. Es zeigen:
Fig. 1 den allgemeinen Aufbau eines Informationssignalübertragungssystems, bei dem die Erfindung angewendet wird,
Fig. 2 eine Übersicht zur Erläuterung der Übertragung von Taktsignalen und Informitionssignalen in einem Mehrfach-Leitungssystem unter Anwendung der Erfindung,
Fig. 3 eine Darstellung des Zeitablaufs der Übertragung von Anfragesignalen und der Erzeugung von Zuordnungssignalen bei der Erfindung,
Fig. 4 eine Schaltungsanordnung zur Erzeugung von Statussignalen,
Fig. 5 einen für die Anfrage bzw. Zuordnung relevanten Teil eines Prozessors sowie einen Schiedsrichter, die über einen Bus miteinander verbunden sind,
Fig. 6 die Schaltung eines in dem Prozessor nich Fig. 5 vorhandenen Anfragegenerators,
Fig. 7 Signalverläufe bei Prozessor und Schiedsrichter gemäß Fig. 5 für verschiedene Betriebszustände des Systems nach Fig. 1, und
Fig. 11 eine Zusatzschaltung zur Erweiterung der Betriebsarten eines Prozessors.

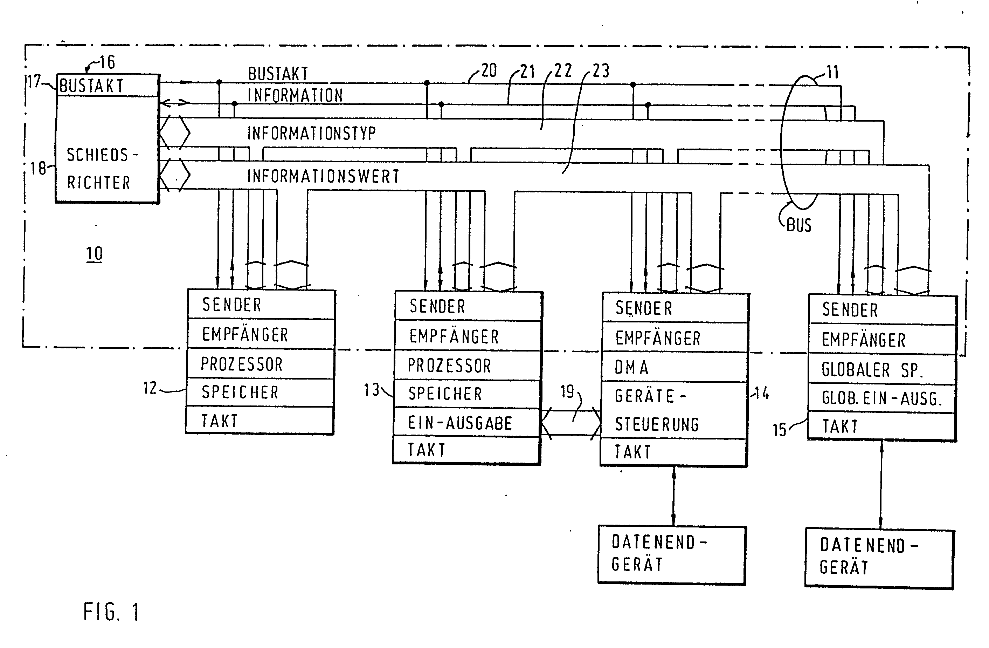

Fig. 1 zeigt den allgemeinen Aufbau eines Informationssignalübertragungssystems 10, in dem zur Übertragung von Informationssignalen und Steuersignalen ein Mehrfach-Leitungssystem 11 dient, das im folgenden als Bus bezeichnet wird. An den Bus 11 sind mehrere datenverarbeitende Einrichtungen 12, 13, 14 und 15 angeschaltet, die über den Bus 11 miteinander in Verbindung treten können. Außerdem ist an den Bus 11 eine Zentraleinheit 16 angeschlossen, die einen zentralen Bustaktgenerator 17 und einen zentralen Zuordner 18 umfaßt, der im folgenden als Schiedsrichter bezeichnet wird. Die datenverarbeitenden Einrichtungen 12 bis 15 können unterschiedlich aufgebaute Einrichtungen sein. So sind beispielsweise die Einrichtungen 12 und 13 Prozessoreinheiten, die jeweils Signalsender, Signalempfänger, einen Prozessor, einen lokalen Speicher und einen eigenen Taktgenerator enthalten. Die Einrichtung 14 ist eine sogenannte DMA-Einheit und enthält Signalsender, Signalempfänger, ein DMA-Gerät für direkten Speicherzugriff, eine zugehörige Gerätesteuerung und einen eigenen Taktgenerator. Die Einrichtung 15 ist eine globale Speichereinheit und enthält Signalsender, Signalempfänger, einen globalen Speicher, eine globale Ein-Ausgabeschaltung und einen eigenen Taktgenerator. Die Einrichtungen 14 und 15 stehen jeweils mit einem Datenendgerät in Verbindung, an dem Daten eingegeben oder ausgegeben bzw. dargestellt werden können. Zwischen den Einrichtungen 13 und 14 ist ein Mehrfach-Verbindungsweg 19 angedeutet, über den die Prozessoreinheit 13 mit der DMA-Einheit 14 auch direkt in Verbindung treten kann, ohne hierzu den Bus 11 zu beanspruchen.

Der Bus 11 besteht aus einem Bündel mehrerer Signalleitungen, auf denen durch Pfeile die jeweils mögliche Übertragungsrichtung von Signalen dargestellt ist. Es ist eine zentrale Bustakt-Signalleitung 20 vorgesehen, über die der zentrale Bustaktgenerator 17 sein Bustaktsignal parallel allen an den Bus 11 anschaltbaren datenverarbeitenden Einrichtungen zuführt. Ferner sind Signalleitungen 21 zur Übertragung von Information-Signalen, Signalleitungen 22 zur Übertragung von Informationstypsignalen und Signalleitungen 23 zur Übertragung von Informationswertsignalen, also z.B. von Adressen und Daten in zeitlicher Folge, vorgesehen.

Der in Fig. 1 dargestellte allgemeine Aufbau eines Informationsübertragungssystems ermöglicht, wie eingangs bereits erläutert, ein beliebiges Korrespondieren zweier oder mehrerer datenverarbeitender Einrichtungen untereinander. Jede datenverarbeitende Einrichtung 12 bis 15 kann, falls in ihrem Bereich ein Anschaltebedürfnis an den Bus 11 besteht, ein Anfragesignal an den zentralen Schiedsrichter 18 abgeben, der dann ggf. den Bus 11 der anfragenden Einrichtung zuordnet, so daß sich diese an den Bus 11 anschalten kann. Im Falle mehrerer gleichzeitiger Anfragen von datenverarbeitenden Einrichtungen entscheidet der zentrale Schiedsrichter 18 gemäß einer in ihm als Algorithmus gespeicherten Zuordnungsvorschrift, welche der anfragenden datenverarbeitenden Einrichtungen als erste an den Bus 11 angeschaltet werden darf und wie die Anschaltereihenfolge der übrigen anfragenden Einrichtungen sein wird. Grundsätzlich ist die Erfindung auch auf Systeme mit dezentraler Zuordnung anwendbar, bei denen jede an den Bus anschaltbare datenverarbeitende Einrichtung einen Schiedsrichter enthält.

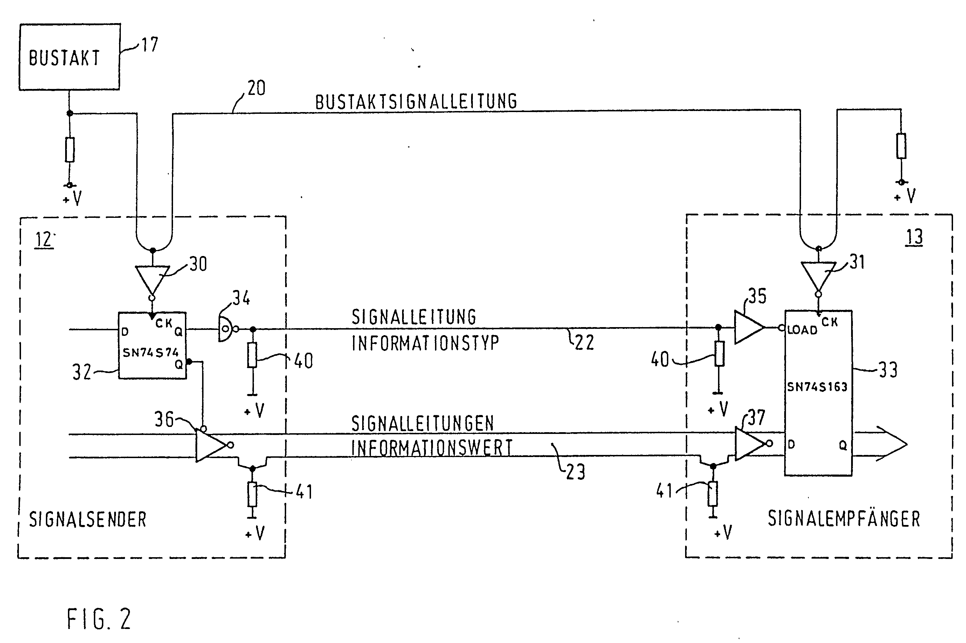

In Fig. 2 ist vereinfacht die bei der Erfindung angewandte prinzipielle Art der Signalübertragung unter Steuerung durch das Bustaktsignal zwischen den datenverarbeitenden Einrichtungen 12 und 13 dargestellt. Für die Einrichtung 12 sind Teile eines Signalsenders, für die Einrichtung 13 Teile eines Signalempfängers gezeigt. Beide Einrichtungen 12 und 13 sind miteinander in beschriebener Weise über die Bustakt-Signalleitung 20, eine Informationstyp-Signalleitung 22 und Informationswert-Signalleitungen 23 miteinander verbunden. Das Bustaktsignal des zentralen Bustaktgenerators 17 wird über die Bustakt-Signalleitung 20 den beiden Einrichtungen 12 und 13 zugeführt, wobei jeweils ein Taktsignal-Eingangsverstärker 30 bzw 31 vorgesehen ist. Das Bustaktsignal steuert dann in dem Signalsender ein einflankengesteuertes Senderegister 32 und im Signalempfänger ein einflankengesteuertes, synchron ladbares Empfangsregister 33. Das Senderegister 32 ist beispielsweise vom Typ SN74S74, das Empfangsregister vom Typ SN74S163. Fig. 2 zeigt die Verbindung des Senderegisters 32 mit dem Empfangsregister 33 hinsichtlich der Informationswertsignale über mehrere Signalleitungen 23, was bedeutet, daß je nach art des jeweils übertragenen Informationswertsignals weitere Empfangsregister mit den Signalleitungen 23 verbunden sein können.

Die Steuerung der Signalübertragung zwischen den beiden datenverarbeitenden Einrichtungen bzw. Prozessoren 12 und 13 durch das zentrale Bustaktsignal erfolgt nun derart, daß die Informationssignale mit einer aktiven Flanke auf die Informationswert-Signalleitungen 23 gegeben und mit der nächstfolgenden aktiven Flanke des Bustaktsignals in das Empfangsregister 33 übernommen werden. Gleichzeitig werden über die Informationstyp-Signalleitung 22 Kriterien übertragen, die kennzeichnen, um welche Signalart es sich jeweils bei den Informationswertsignalen handelt, die über die Signilleitungen 23 übertragen werden.

Das Senderegister 32 gibt die Informationstypsignale, gesteuert durch die genannte aktive Flanke des Bustaktsignals, über einen Signalsender 34 auf die Informationstyp-Signalleitung 22 , und diese Informationstypsignale gelangen über einen Eingangsempfänger 35 auf den Ladeeingang LOAD des Empfangsregisters 33. Gleichzeitig mit der Abgabe der Informationstypsignale durch einen Bustaktimpuls wird ein Steuersignal auf den Steuereingang einer Torschaltung 36 gegeben, die eine Tri-State- oder Open-Collector-Treiberschaltung ist, wodurch diese die in nicht dargestellter Weise anstehenden Informationswertsignale auf die Informationswert-Signalleitungen 23 leitet, so daß sie mit dem nächstfolgenden Bustaktimpuls über einen Empfänger 37 in das Empfangsregister 33 übernommen werden. Über die Ausgänge Q werden die empfangenen Informationswertsignale in nicht dargestellter Weise weiter ausgewertet.

Es ist zu erkennen, daß die Steuersignale, die über die Informationstyp-Signalleitung 22 übertragen werden, wie Informationswertsignale behandelt werden. Die Steuersignale betreiben den die Eingabe veranlassenden Steuereingang LOAD des Empfangsregisters 33, während die Informationswertsignale auf dessen Dateneingänge D gelangen. Gleichzeitig steuert die aktive Flanke des Bustaktsignals den Takteingang CK des Empfangsregisters 33 und bestimmt den Zeitpunkt der Registrierung der Steuersignale und der Informationswertsignale.

Zwischen dem in Fig. 2 gezeigten Signalsender und dem Signalempfänger erfolgt keine besondere Informationsverarbeitung, wie dies beispielsweise bei einem Adreßvergleich der Fall wäre. Somit geschieht auch keine zeitliche Unterbrechung oder Verzögerung auf dem Übertragungsweg, so daß die für die Übertragung der Informationssignale erforderliche Zeit sehr kurz gehalten wird und einer Bustaktperiode entspricht. Da somit die minimale Periodendauer des zentralen Bustaktsignals nur von physikalischen Größen des Leitungssystems abhängt kann sie jeweils auf das vorhandene Leitungssystem optimiert d.h. möglichst kurz gewählt werden. Bei einem physikalisch "kurzen Bus" kann mit Ausnahme der Bustakt-Signalleitung auf physikalisch korrekt abgeschlossene Signalleitungen verzichtet werden, so daß als Abschlußwiderstände, die in Fig. 2 bei 40 und 41 symbolisch gezeigt sind, relativ hochohmige Widerstände verwendet werden können. Dies wiederum bedeutet, daß die Ausgangs-Signalverstärker für die Signalleitungen mit Ausnahme der Bustakt-Signalleitung 20 eine relativ kleine Leistung haben dürfen, womit wiederum die bereits erläuterten längeren Anstiegs- und Abfallzeiten der übertragenen Signale verbunden sind, die den physikalischen Zustand des "kurzen Bus" bestätigen. Der an sich nun auftretende Nachteil der langen Anstiegs- und Abfallzeiten der Steuersignale bei deren direkter Verwendung zur Übernahme der Informationswertsignale in das Empfangsregister 33 hätte zur Folge, daß der Zeitpunkt der Übernahme der Informationswertsignale in das Empfangsregister 33 nicht genau bestimmbar ist, womit eine unnötig lange Zeit für den korrekten Transport der Informationswerte zur Verfügung gestellt werden müßte. Dieser Nachteil wird aber dadurch beseitigt, daß im Rahmen der Erfindung die Informationstypsignale wie Informationswertsignale behandelt und gleichartig wie diese über eine während der Anfrage und der Zuordnung fest zugeteilte Signalleitung übertragen werden können. Die Bustakt-Signalleitung 22 wird dabei von einem Signaltreiber hoher Leistung betrieben, so daß sie als physikalisch abgeschlossene Signalleitung betrachtet werden kann und somit Taktflanken geringer Anstiegs- und Abfallzeit übertragen werden können. Die daraus resultierende aktive steile Flanke definiert bei einem einflankengetriggerten synchron ladbaren Empfangsregister den Zeitpunkt der Übernahme des Informationstypsignals und der Informationswertsignale sehr genau. Das bedeutet eine Verkürzung der für den korrekten Transport der Informationswerte erforderlichen Zeit, womit gleichzeitig die Busbelegungszeit auf ein ausrechenbares Minimum verkürzt werden kann.

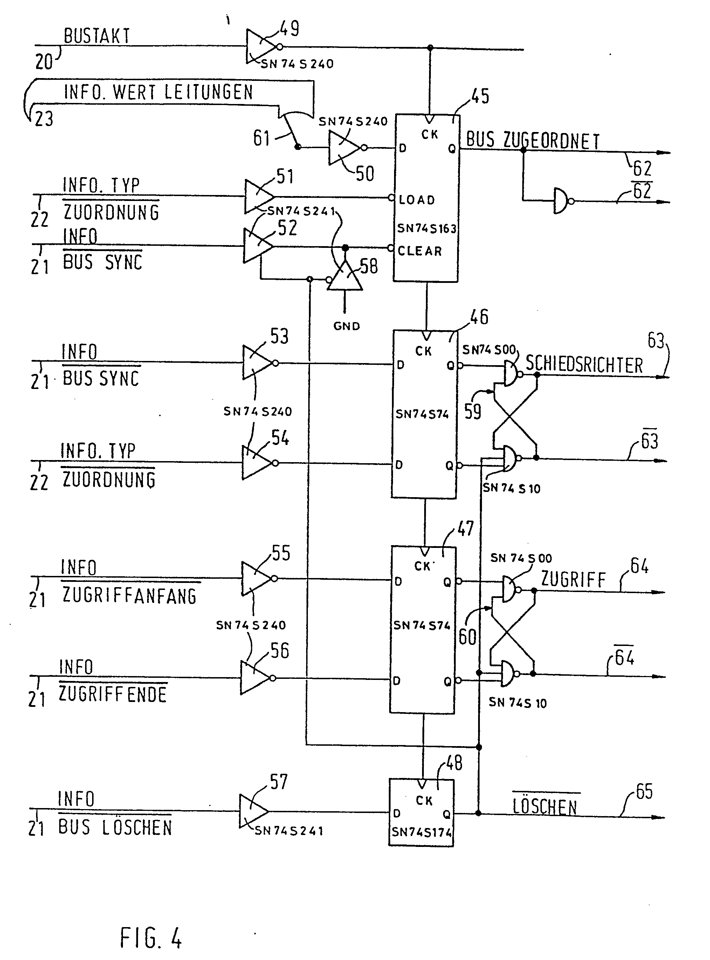

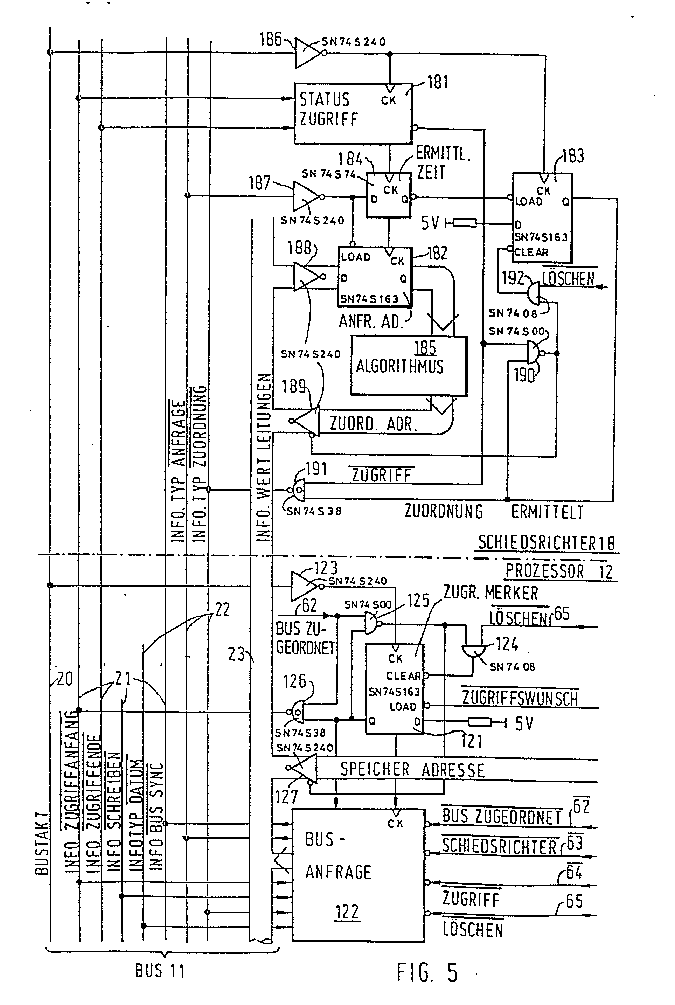

Es sei nun beispielsweise angenommen, daß eine der in Fig. 1 gezeigten datenverarbeitenden Einrichtungen 12 bis 14 mit der globalen Speichereinheit 15 Verbindung aufnehmen soll, um einen Lesezugriff durchzuführen. Es sei ferner vorausgesetzt, daß eine dieser datenverarbeitenden Einrichtungen bereits eine Verbindung mit dieser globalen Speichereinheit 15 unterhält und daß bereits ein Informationsaustausch mit dem dort vorhandenen globalen Speicher erfolgt. Fig. 3 zeigt, daß im Zuge dieses Informationsaustausches über die Informationswert-Signalleitungen 23 während der Bustaktperiode 1 eine Speicheradresse von dieser Einrichtung übermittelt wird. Auf die Bustaktperiode 1 folgt die Bustaktperiode 2, während der die Zugriffzeit des so ingesteuerten globalen Speichers abläuft, d.h. diejenige Zeit, die der Speicher benötigt, um nach der Ansteuerung durch die Speicheradresse Daten auszugeben. Diese Zeit ist demnach ein Zeitabschnitt, während dem über die Informationswert-Signalleitungen 23 keine Informationswertsignale übermittelt werden. Während dieses Zeitabschnitts kann nun von einer anderen datenverarbeitenden Einrichtung zur Einleitung einer anderen Verbindung ein Anfragesignal über eine Informationswert-Signalleitung 23 an den zentralen Schiedsrichter 18 (Fig. 1) übermittelt werden. Dieses Anfragesignal wird als Anfrageadresse bezeichnet, da es sich dabei um die Adresse der anfragenden Einrichtung bzw. des anfragenden Prozessors handelt. In der Bustaktperiode 3 verarbeitet der Schiedsrichter 18 die Anfrageadresse und ermittelt eine Zuordnungsadresse, während gleichzeitig gelesene Daten von dem globalen Speicher an die mit ihm bereits verbundene Einrichtung abgegeben werden, da die Zugriffzeit abgelaufen ist. Nachdem der Schiedsrichter 18 die Zuordnung gemäß dem in ihm gespeicherten Zuordnungs algorithmus ermittelt hat, gibt der nach Ende des Lesezugriffs in der Bustaktperiode 9 die ermittelte Zuordnungsadresse über die Informationswert-Signalleitungen 23 auf den Bus 11, die von der so adressierten datenverarbeitenden Einrichtung empfangen wird, so daß sich diese an den Bus 11 anschalten kann. Anschließend kann ein Speicherzugriff von der angeschalteten Einrichtung aus durchgeführt werden.

Es ist zu erkennen, daß die Zugriffzeit des Speichers sowie die Zeit, in der gelesene Daten übertragen werden, ausgenutzt werden, um einerseits eine Anfrageadresse einer anderen an den Bus 11 anzuschaltenden datenverarbeitenden Einrichtung über die Informationswert-Signalleitungen 23 zu übermitteln, andererseits eine Zuordnung innerhalb des zentralen Schiedsrichters 18 zu ermitteln, wonach anschließend die Zuordnungsadresse über die Informationswert-Signalleitungen 23 übertragen werden kann. Obwohl für diese letztere Übermittlung ein zusätzlicher Zeitabschnitt erforderlich ist, wird durch die Ausnutzung der Speicherzugriffzeit und der Zeit, in der nachfolgend Lesedaten aus dem Speicher ausgegeben werden, eine Zeiteinsparung erzielt, die größer ist als die Zeit für die Übermittlung der neuen Zuordnungsadresse.

Da mehrere Informationswert-Signalleitungen 23 innerhalb des Bus 11 vorhanden sind, die während laufender Speicherzugriffe keine Speicherdaten führen, kann jeweils eine dieser Leitungen einer datenverarbeitenden Einrichtung als Anfrageadreßleitung bzw. Zuordnungsadreßleitung fest zugeteilt sein. Ein wesentlicher Vorteil dieses Verfahrens besteht darin, daß durch diese feste Zuteilung von Informationswert-Signalleitungen eine besondere Dekodierung der Prozessoradressen oder sonstiger Adressen für datenverarbeitende Einrichtungen, die an den Bus anzuschalten sind, nicht erforderlich ist. Die feste Zuteilung kann innerhalb eines Systems z.B. durch feste Verdrahtung der Informationswert-Signalleitungen mit den vorhandenen Datenverarbeitungseinrichtungen ggf. auch über mechanische Umschalter verwirklicht sein.

Analog zu dem vorstehend beschriebenen Verfahren kann von einer datenverarbeitenden Einrichtung nicht eine globale Speichereinheit, sondern auch der lokale Speicher einer anderen datenverarbeitenden Einrichtung über den Bus 11 angesteuert werden.

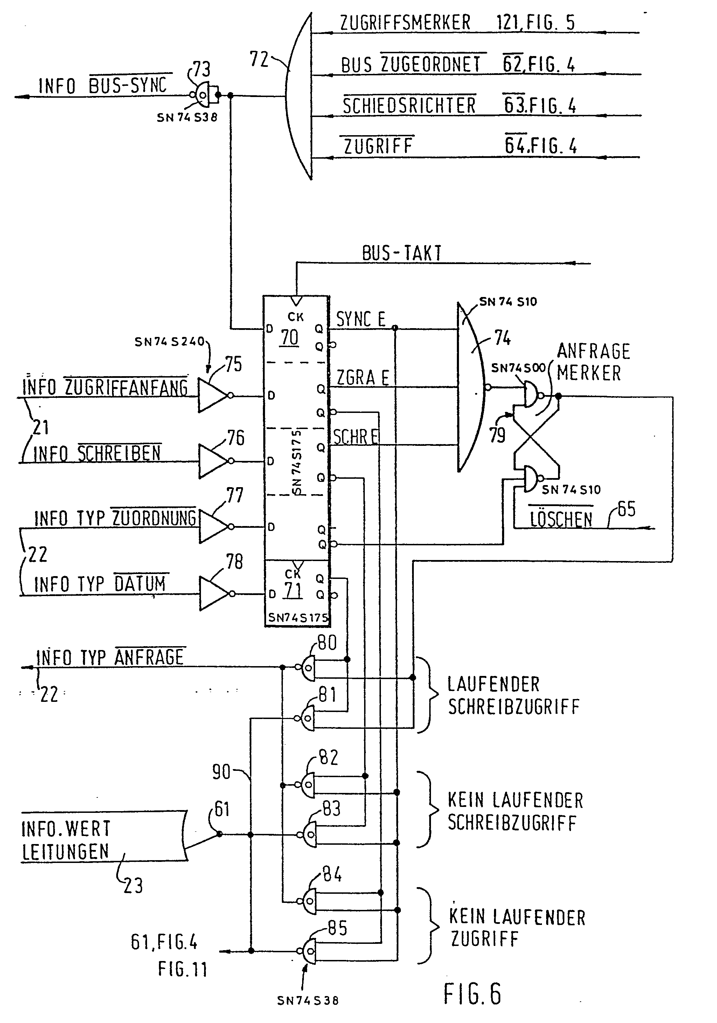

Für den Ablauf des erfindungsgemäßen Verfahrens ist die Erzeugung von Statussignalen erforderlich. Fig. 4 zeigt hierzu eine Schaltungsanordnung, die sehr einfach aufgebaut ist und nich dem anhand der Fig. 2 bereits beschriebenen Prinzip arbeitet. Mehrere durch den Bustakt gesteuerte Empfangsregister werden mit Informationswertsignalen, Informationstypsignalen und Information-Signalen angesteuert und geben je nach art der Ansteuerung Statussignale ab, die in einer an den Bus anzuschaltenden datenverarbeitenden Einrichtung bzw. in dem zentralen Schiedsrichter 18 für Anfrage bzw. Zuordnung ausgewertet werden können. Eine Schaltungsanordnung der in Fig. 4 gezeigten Art kann also in jeder der in Fig. 1 gezeigten datenverarbeitenden Einrichtungen 12 bis 15 und auch in dem zentralen Schiedsrichter 18 vorgesehen sein.

Fig. 4 zeigt als wesentliche Bestandteile dieser Schaltungsanordnung vier Empfangsregister 45, 46, 47, 48, die an ihren Takteingängen CK durch das Taktsignal der Bustakt-Signalleitung 20 gesteuert werden, welche hierzu über einen invertierenden Empfänger 49 vom Typ SN74S240 angeschlossen ist. Die Empfangsregister 45, 46, 47 und 48 werden an ihren Eingängen jeweils über einen invertierenden bzw. nicht invertierenden Empfänger 51, 52, 57, 58 vom Typ SN74S241 bzw. 50, 53 bis 56 vom Typ SN74S240 angesteuert, der ggf. auch als Tri-State-Treiber benutzt wird. Die beiden Empfangsregister 46 und 47 sind an ihren Q̄-Ausgängen mit bistabilen Schaltungen 59 und 60 verbunden, die jeweils aus zwei in bekannter Weise untereinander verbundenen NAND-Gliedern der Typen 74S00 und 74S10 bestehen und den an ihnen gesetzten Schiltzustand bzw. das mit ihnen abgegebene Ausgangssignal solange halten, bis sie zur erneuten Signaländerung durch das jeweilige Empfangsregister 46 bzw. 47 angesteuert werden. Die Empfangsregister 45, 46 und 47 sind vom Typ SN74S163 bzs. SN74S74. Das Empfangsregister 48 ist vom typ SN74S174.

Die Informationswert-Signalleitungen 23 des Bus 11 (Fig. 1) sind auf einen mechanischen Umschalter 61 geführt, der in bereits beschriebener Weise eine der Informationswert-Signalleitungen 23 der in Fig. 4 gezeigten Schaltung zuteilt und die Ansteuerung des Empfangsregisters 45 über den Empfänger 50 mit einem Informationswertsignal ermöglicht. Als weitere Eingangsleitungen sind für die in Fig. 4 gezeigte Schaltungsanordnung Informationstyp-Signalleitungen 22 und Information-Signalleitungen 21 vorgesehen. Diese führen der Schaltungsanordnung die Informationstyp-Signale ZUORDNUNG sowie die Information-Signale BUS SYNC, ZUGRIFFANFANG, ZUGRIFFENDE und BUS LÖSCHEN zu. Als Ausgangssignale ergeben sich dann an den ausgängen 62, 63, 64 und 65 die Statussignale BUS ZUGEORDNET, SCHIEDSRICHTER, ZUGRIFF und LÖSCHEN bzw. deren Umkehrungen an den Ausgängen 62, 63 und 64.

Für die als Empfänger benutzten Tri-State-Treiber 52 und 58 ist eine Verbindung der Steuereingänge mit dem Ausgang 65 LÖSCHEN dargestellt, die in an sich bekannter Weise dafür sorgt, daß die Schaltungsanordnung in Verbindung mit dem Bus 11 am Löscheingang CLEAR des Empfangsregisters 45 sowie an den bistabilen Schaltungen 59 und 60 in einen definierten Ausgangszustand gebracht werden kann, indem das Signal LÖSCHEN an diesen Stellen gleichzeitig für einen definierten Zustand sorgt. Die Ansteuerung des Empfangsregisters 48 mit der Information BUS LÖSCHEN bewirkt, daß mit Ende des Löschvorganges alle an den Bus 11 angeschlossenen Prozessoren bzw. datenverarbeitenden Einrichtungen gleichzeitig in einen übereinstimmenden definierten Zustand geschaltet sind.

Die in Fig. 4 gezeigte Schaltungsanordnung ist infolge der Anwendung des anhand der Fig. 2 bereits beschriebenen Signalübertragungsprinzips sehr einfach aufgebaut und enthält lediglich vier Empfangsregister. Es ist zu erkennen, daß beispielsweise dis Statussignal BUS ZUGEORDNET am Ausgang 62 durch Ansteuerung des Empfangsregisters 45 in beschriebener Weise mit einer Zuordnungsadresse über eine Informationswertleitung 23, mit dem Informationstypsignal ZUORDNUNG und dem Fehlen des Informationssignals BUB SYNC veranlaßt wird. Die anderen Empfangsregister 46, 47 und 48 werden zur Erzeugung der entsprechenden Statussignale an den Ausgängen 63, 64 und 65 analog angesteuert.

In Fig. 5 sind schematisch in Verbindung mit einem Abschnitt des Bus 11 der Schiedsrichter 18 und der Prozessor 12 dargestellt. Im folgenden wird nun beschrieben, welche für das erfingungsgemäße Verfahren relevanten Funktionseinheiten im Schiedsrichter 18 und in dem Prozessor 12 enthalten sind. Der Prozessor 12 ist lediglich als Beispiel für eine mit dem Bus 11 zu verbindende datenverarbeitende Einrichtung gezeigt. In gleicher Weise könnte es sich hier auch um ein DMA-Gerät handeln, wie es anhand der Fig. 1 bereits beschrieben wurde.

Fig. 5 zeigt den Bus 11 mit seinen einzelnen Signalleitungen 21, 22 und 23 für Informition, Informationstyp und Informationswert sowie mit der Bustakt-Signalleitung 20. Die Information-Signalleitungen 21 und die Informationstyp-Signalleitungen 22 sowie die Informationswert-Signalleitungen 23 führen die verschiedenen für das erfingungsgemäße Verfahren relevanten Signale, wie sie anhand der Fig. 4 bereits erläutert wurden. Zusätzlich sind eine Information-Signalleitung für SCHREIBEN und eine Informationstyp-Signalleitung für DATUM vorgesehen.

Die in Fig. 5 gezeigten Funktionsgruppen des Schiedsrichters 18 und des Prozessors 12 nehmen Signale von den einzelnen Signalleitungen des Bus 11 auf und geben Signale auf diese Leitungen ab. Der Schiedsrichter 18 enthält eine Schaltung 181 zur Erzeugung eines Statussignals ZUGRIFF, ein Register 182 für die Aufnahme einer Anfrageadresse über die Informationswert-Signalleitungen 23, eine Schaltung 183 zur Abgabe eines Signals ZUORDNUNG ERMITTELT, ein Register 184 zur Abgabe eines Signals, welches die Ermittlungszeit kennzeichnet und dieses Signal der Schaltung 183 zuführt, sowie eine Schaltung 185, in der ein Zuordnungsalgorithmus z.B. als Tabelle innerhalb eines programmierbaren Festwertspeichers realisiert.ist. Die Register 182 und 184 werden nach dem anhand der Fig. 2 bereits erläuterten Prinzip angesteuert und geben ihre Signale auch in entsprechender Weise ab, Hierzu und zur Aufnahme des Bustaktes dienen invertierende Empfänger bzw. Sender 186, 187, 188 und 189. Der Sender 189 wird als Tri-State-Treiber betrieben und erhält ein entsprechendes Steuersignil von einem NAND-Glied 190, welches durch das Statussignal ZUGRIFF und durch das Signal ZUORDNUNG ERMITTELT angesteuert wird. Ein nach dem Open-Collector-Prinzip arbeitendes NAND-Glied 191 wird durch das Statussignal ZUGRIFF und durch das Signal ZUORDNUNG ERMITTELT angesteuert und gibt sein Ausgangssignal ZUORDNUNG auf eine Informationstyp-Signalleitung 22.

Ein UND-Glied 192 steuert den Löscheingang des Registers 183 und erhält als Eingangssignale das Statussignal LÖSCHEN sowie das Ausgangssignal des NAND-Gliedes 190.

Die Schaltungen 181, 182, 183 und 184 werden durch den Bustakt über den invertierenden Empfänger 186 taktgesteuert und sind an ihren Takteingängen CK hierzu untereinander verbunden.

Das Ermittlungszeitregister 184 wird durch das Informationstyp-Signal ANFRAGE über den invertierenden Empfänger 187 angesteuert. Das Anfrageadressenregister 182 wird gleichfalls durch dieses Signal sowie durch Informationswertsignale auf den entsprechenden Signalleitungen 23 des Bus 11 angesteuert. Seine Ausgangssignale steuern die Schaltung 185 für den Zuordnungsalgorithmus, welche wiederum eine Zuordnungsadresse über den invertierenden Sender 189 auf die Informationswert-Signalleitungen 23 gibt.

Die Schaltungen 182 und 183 sind vom Typ SN74S163, das Register 184 vom Typ SN74S74. Die Empfänger bzw. Sender 186, 187 und 188 und 189 sind vom Typ SN74S240. Das NAND-Glied 191 ist vom Typ SN74S38, das NAND-Glied 190 vom Typ SN74S00 und das UND-Glied 192 vom Typ SN7408.

Der Prozessor 12 enthält als für die Durchführung des erfingungsgemäßen Verfahrens wichtigste Funktionseinheiten ein Register 121 und einen Generator 122 für die Bus-Anfrage, dessen Aufbau im folgenden noch näher erläutert wird. Das Register 121 wird auch als Zugriffsmerker bezeichnet und ist vom Typ SN74S163. Es wird von der Bustakt-Signalleitung 20 her über einen invertierenden Empfänger 123 vom Typ SN74S240 taktgesteuert und erhält an seinem Ladeeingang LOAD ein Signal ZUGRIFFSWUNSCH des Prozessors, wenn dieser an den Bus 11 angeschaltet werden soll. An dem Löscheingang CLEAR erhält das Register 121 das Ausgangsignal einer UND-Schaltung 124 vom Typ SN7408, welche an ihrem einen Eingang das Statussignal LÖSCHEN über den Ausgang 65 der Fig. 4 gezeigten Statusschaltung und an ihrem anderen Eingang das Ausgangssignal eines NAND-Gliedes 125 vom Typ SN74S00 erhält, welches durch den Q-Ausgang des Registers 121 und durch das Statussignal BUS ZUGEORDNET über den Ausgang 52 der Schaltung nach Fig. 4 angesteuert wird. Der Q-Ausgang des Registers 121 ist mit dem einen Eingang eines nach dem Open-Collector-Prinzip arbeitenden NAND-Gliedes 126 vom Typ SN74S38 verbunden, dessen anderer Eingang mit dem Statussignal BUS ZUGEORDNET angesteuert wird. Dieses NAND-Glied 126 gibt sein Ausgangssignal auf die Information-Signalleitung 21, welches dann als ZUGRIFFANFANG zu bezeichnen ist.

Wie bereits erläutert, gibt der Prozessor 12, falls ein Lesezugriff oder Schreibzugriff zu einem Speicher über den Bus 11 erfolgen soll, eine Speicheradresse auf die Informationswert-Signalleitungen 23. Dies erfolgt über einen als Tri-State-Treiber arbeitenden invertierenden Sender 127 vom Typ SN74S240.

Der Generator 122 für eine Bus-Anfrage wird durch die vier Status-Signale angesteuert, die den Ausgängen 62, 63, 64, 65 der Schaltungsanordnung nach Fig. 4 entnommen werden können. Dieser Generator ist durch das Taktsignal der Bus-Taktsignalleitung 20 an seinem Takteingang CK taktgesteuert. An einem weiteren Eingang wird er durch die Ausgangssignale am Ausgang Q des Registers 121 angesteuert. Außerdem erhält er in weiteren Eingängen die Signale ZUGRIFFANFANG, SCHREIBEN, ZUORDNUNG und DATUM. Als Ausgangssignale gibt der Generator 122 Informationswertsignale auf die Informationswert-Signalleitungen 23 sowie die Signale BUS SYNC und ANFRAGE auf je eine Leitung 21 bzw. 22 des Bus 11.

Wenn bei der in Fig. 5 gezeigten Schaltung innerhalb des Prozessors 12 ein Zugriffswunsch auftritt, so wird dieses Kriterium an dem Ladeeingang des Zugriffsmerkers bzw. Registers 121 wirksam. Falls der Bus 11 nicht zugeordnet ist, so wird der Zugriffswunsch ohne weitere Aktivierung des Registers 121 gespeichert und auf den Generator 122 für die Bus-Anfrage gegeben, welcher wiederum die Information BUS SYNC auf eine Information-Signalleitung 21 gibt. Dieses Signal gewährleistet, daß der Status BUS ZUGEORDNET an keiner der mit dem Bus 11 verbundenen datenverarbeitenden Einrichtungen auftritt (62, Fig. 4), so daß dieses Kriterium in diesen Einrichtungen insgesamt festgestellt wird, was bedeutet, daß die Zuordnung des Bus zu dem bisherigen Prozessor aufgehoben wird und daß der nun nicht mehr zugeordnete Bus dem anfragenden Prozessor 12 zugeordnet werden kann. Der Generator 122 erzeugt die Information BUS SYNC und anschließend das Informationstyp-Signal ANFRAGE zusammen mit der eigenen Prozessoradresse als Informationswertsignal. Diese wird über eine fest zugeteilte Informationswert-Signalleitung 23 an den Schiedsrichter 18 übermittelt und dort zusammen mit dem Informationstyp-Signal ANFRAGE in das Anfrageadreßregister 182 übernommen. Das Informationstyp-Signal ANFRAGE setzt auch das Ermittlungszeitregister 184 und dieses die Schaltung 183. Auf diese Weise wird die minimale Zeit für die Ermittlung der Zuordnungsadresse definiert.

Besteht der mit der Schaltung 181 festgestellte Status ZUGRIFF nicht, so wird mit dem Signal ZUORDNUNG ERMITTELT die Zuordnungsadresse als Informationswert-Signal auf die Informationswert-Signalleitungen 23 gegeben und über das NAND-Glied 191 das Informationstyp-Signal ZUORDNUNG auf eine Informationstyp-Signalleitung 22 gegeben.

Besteht jedoch der Status ZUGRIFF nicht, so wird durch die beiden NAND-Glieder 190 und 191 die Zuordnung verhindert, bis der Status ZUGRIFF eintritt. Das Ende eines jeweils laufenden Zugriffs wird also abgewartet.

Empfängt der Prozessor 12 das Informationstyp-Signal ZUORDNUNG und die Zuordnungsadresse, so gelangt er in den Status BUS ZUGEORDNET, den die in Fig. 4 gezeigte Schaltung mit dem Empfangsregister 45 erzeugt. Dieses Statussignal aktiviert zusammen mit dem durch den Zugriffswunsch gesetzten Register 121 die abgabe der Information ZUGRIFF ANFANG über das NAND-Glied 126 und des Informationswert-Signals SPEICHERADRESSE über den Sender 127, wodurch eine Verbindung mit dem Speicher einer anderen Datenverarbeitungseinrichtung über den Bus 11 hergestellt ist.

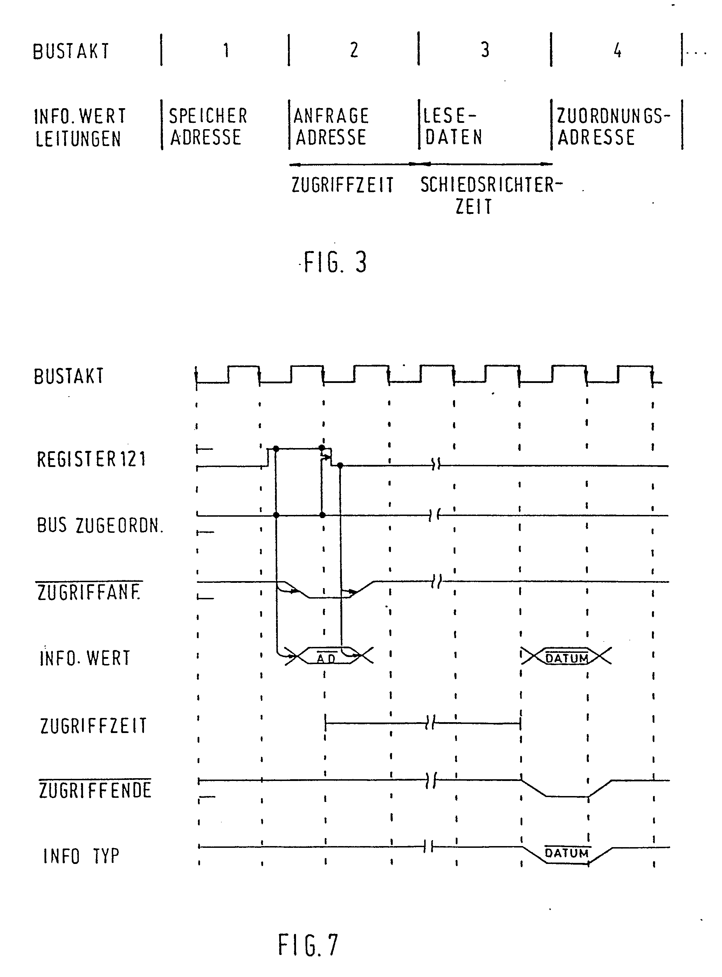

Die vorstehend allgemein erläuterten Vorgänge werden im folgenden noch anhand der in Fig. 7 bis 10 gezeigten Zeitdiagramme erläutert. Zuvor wird jedoch anhand der Fig. 6 noch der Aufbau des Generators 122 für die Bus-Anfrage beschrieben.

In Fig. 6 ist im einzelnen die Schaltung des Generators 122 (Fig. 5) für die Busanfrage dargestellt. Als wesentliche Teile enthält dieser Generator zwei Register 70 und 71, die jeweils vom Typ SN74S175 sind und durch die Taktsignale jeweils am Takteingang CK gesteuert werden. Drei D-Eingänge des Registers 70 werden durch die Informationen ZUGRIFF-ANFANG und SCHREIBEN jeweils über einen invertierenden Empfänger 75 bzw. 76 vom Typ SN74S240 angesteuert. Ein dritter D-Eingang wird durch ein Informationstyp-Signal ZUORDNUNG über einen invertierenden Empfänger 77 angesteuert, der gleichartig wie die Empfänger 75 und 76 aufgebaut ist. Ein vierter D-Eingang wird durch die in einer UND-Schaltung 72 verknüpften Statussignale angesteuert, die an den Ausgängen 62, 63 und 64 der Schaltung nach Fig. 4 abgegeben werden, und zusätzlich durch das Ausgangssignal des Zugriffsmerkers 121 (Fig. 5). Die Information BUS SYNC wird aus dem Ausgangssignal des UND-Gliedes 72 über ein nach dem Open-Collector-Prinzip arbeitendes, als Inverter geschaltetes NAND-Glied 73 vom Typ SN74S38 abgeleitet und in der in Fig. 5 gezeigten Weise auf eine Information -Signalleitung 21 gegeben.

Die Information BUS SYNC geht der Übermittlung von Anfragesignalen voraus. Wie bereits erläutert, soll diese Übermittlung innerhalb einer einzigen Taktperiode durchgeführt werden. Deshalb kommt es darauf an, die Information BUS SYNC möglichst sofort mit dem Auftreten einer aktiven Taktsignalflanke zu erzeugen. Die Statussignale, die den Zeitpunkt der Erzeugung des Signals BUS SYNC kennzeichnen, werden über die konjunktive Verknüpfung des UND-Gliedes 72 ausgewertet.

Drei Q-Ausgänge SYNC E, ZGRA E und SCHR E des Registers 70, die durch BUS SYNC, ZUGRIFFANFANG und SCHREIBEN aktiviert werden, sind auf ein NAND-Glied 74 vom Typ SN74S10 geführt, dessen Ausgangssignal zusammen mit einem durch ZUORDNUNG aktivierten Q̄-Ausgangssignal des Registers 70 einer bistabilen Schaltung 79 zugeführt wird, die außerdem mit dem Statussignal LÖSCHEN vom Ausgang 65 der in Fig. 4 gezeigten Schaltung her gesteuert wird. Das Ausgangssignal der bistabilen Schaltung 79 wird also solange gehalten, bis an ihren Eingängen eine erneute Signaländerung veranlaßt wird.

Das zweite Register 71 wird mit dem Informationstyp-Signal DATUM über einen invertierenden Empfänger 78 vom Typ SN74S240 angesteuert und gibt an seinem Q-Ausgang ein Signal ab, das gemeinsam mit dem Ausgangssignal der bistabilen Schaltung 79 zwei von sechs gleichartigen NAND-Gliedern 80 bis 85 ansteuert. Diese arbeiten nach dem Open-Collector-Prinzip und sind vom Typ SN74S38. Die beiden NAND-Glieder 80 und 81 werden an ihren ersten Eingängen durch das mit DATUM aktivierte Q-Ausgangssignal des Registers 71 und an ihren zweiten Eingängen durch das Ausgangssignal der bistabilen Schaltung 79 angesteuert. Die beiden NAND-Glieder 82 und 83 werden an ihren ersten Eingängen durch das mit SCHREIBEN aktivierte Q-Ausgangssignal des Registers 70 und an ihren zweiten Eingängen durch das mit dem eigenen BUS SYNC aktivierte Q-Ausgangssignal SYNC E des Registers 70 angesteuert. Die beiden NAND-Glieder 84 und 85 werden in ihren ersten Eingängen durch das mit ZUGRIFFANFANG aktivierte Q-Ausgangssignal des Registers 70 und an ihren zweiten Eingängen durch das mit dem eigenen BUS SYNC aktivierte Q-Ausgangssignal SYNC E des Registers 70 angesteuert.

Die NAND-Glieder 80 bis 85 geben das Informationstyp-Signal ANFRAGE auf eine Informationstyp-Signalleitung 22, und zwar in Form der Ausgangssignale der NAND-Glieder 80, 82 und 84. Die Ausgangssignale der NAND-Glieder 81, 83 und 85 sind über ihre Verbindung 90 gemeinsam auf den mechanischen Schalter 61 geführt, mit dem in für Fig. 4 bereits beschriebener Weise eine der Informationswertleitungen 23 dem Prozessor fest zugeteilt ist, der den in Fig. 6 gezeigten Generator 122 enthält. Die durch die NAND-Glieder 80 bis 85 erreichte Verknüpfung ihrer Eingangssignale hat den in Fig 6 für jeweils ein Paar der NAND-Glieder 80 bis 85 angegebenen Effekt, nämlich daß die NAND-Glieder 80 und 81 ein Informationstypsignal ANFRAGE sowie gleichzeitig ein Signal auf die zugeteilte Informationswertleitung 23 geben, wenn bei der mit dem Generator durchzuführenden Busanfrage ein Schreibzugriff auf dem Bus 11 läuft. Die NAND-Glieder 82 und 83 geben ein solches Signal über die Busleitungen 22 und 23 ab, wenn kein Schreibzugriff, sondern z.B. ein Lesezugriff, auf dem Bus 11 läuft. Die NAND-Glieder 84 und 85 geben ein solches Signal ab, wenn überhaupt kein Zugriff auf dem Bus 11 läuft. Auf diese Weise werden die verschiedenen möglichen Betriebszustände erfaßt, wenn der Generator 122 eine Anfrage zwecks Durchführung eines Lesezugriffs starten soll.

Anhand der Fig. 7 wird im folgenden beschrieben, wie ein Lesezugriff von einer datenverarbeitenden Einrichtung über den Bus 11 zu einem Speicher einer anderen Einrichtung bzw. einem globalen Speicher durchgeführt wird. Dabei sei vorausgesetzt, daß der Bus 11 der Datenverarbeitungseinrichtung bereits zugeordnet ist. Fig. 7 zeigt den Bustakt-Signalverlauf, wobei angedeutet ist, daß die jeweils abfallende Flanke des Bustaktes einen mit ihr zu steuernden Vorgang veranlaßt. Die Spannungspegeländerung pro Zeiteinheit ist für alle über den Bus 11 übertragenen Signale mit Ausnahme des Bustaktes relativ klein dargestellt, da die relativ große Kapazität der physikalisch kurzen Bus-Signalleitungen von einem relativ schwachen Signalsender nur langsam umgeladen werden kann. Dagegen wird die Bustakt-Signalleitung von einem starken Signalsender mit großer Spannungspegeländerung pro Zeiteinheit betrieben, so daß die Bustakt-Signalleitung als physikalisch lange, abgeschlossene Signalleitung zu betrachten ist.

Wir bereits anhind der Fig. 6 erläutert wurde, wird bei Auftreten eines Anschaltewunsches in einem Prozessor bzw. in einer datenverarbeitenden Einrichtung ein Register ZUGRIFFMERKER gesetzt, was in Fig. 7 in dem ersten Signalverlauf für das Register 121 gezeigt ist. Da voraussetzungsgemäß der Bus 11 dem anfragenden Prozessor bereits zugeordnet ist, was der Signalverlauf BUS ZUGEORDNET zeigt, ist ein besonderer Zuordnungsvorgang nicht mehr erforderlich, so daß mit der Verknüpfung der Signale ZUGRIFFMERKER (Reg. 121) und BUS ZUGEORDNET das Signal ZUGRIFFANFANG veranlaßt wird. Dies wurde in Verbindung mit Fig. 5, insbesondere für das NAND-Glied 126, bereits beschrieben. Mit dem Beginn des Zugriffs ist der Bus 11 weiter dem anfragenden Prozessor zugeordnet.

Fig. 7 zeigt in Verbindung mit der abfallenden Flanke des Bustaktes, daß das Ausgangssignal des Registers 121 und das Signal BUS ZUGEORDNET (über das NAND-Glied 126, Fig. 5) das Signal ZUGRIFFANFANG erzeugen, welches in seinem aktiven Zustand den Binärwert Null hat. Gleichzeitig mit dem Signal ZUGRIFFANFANG wird dann als Informationswert-Signal die Speicheradresse ausgegeben, über die über den Bus 11 ein Speicher einer anderen datenverarbeitenden Einrichtung bzw. der globale Speicher anzusteuern ist. Diese Speicheradresse ist in Fig. 7 mit AD bezeichnet. Die Ausgabe dieser Speicheradresse AD erfolgt über das in Fig. 5 gezeigte Tri-State-Verstärkerglied 127, gesteuert durch das Ausgangssignal des NAND-Gliedes 125.

Fig. 7 zeigt ferner, daß mit der Ausgabe der Speicheradresse AD die Zugriffzeit beginnt, während der der Prozessor bzw. die datenverarbeitende Einrichtung zu einer Speichereinrichtung über den Bus 11 zugreift. Mit Ende der Zugriffzeit wird ein Signal ZUGRIFFENDE veranlaßt, das im aktiven Zustand gleichfalls den Binärwert Null hat und in beschriebener Weise erzeugt wird. Mit dem Ende des Speicherzugriffs erfolgt die Ausgabe gelesener Daten auf den Bus 11. Dieser Vorgang ist in Fig. 7 als Informationswert-Signale DATUM bzw. als Informationstyp-Signal DATUM dargestellt.

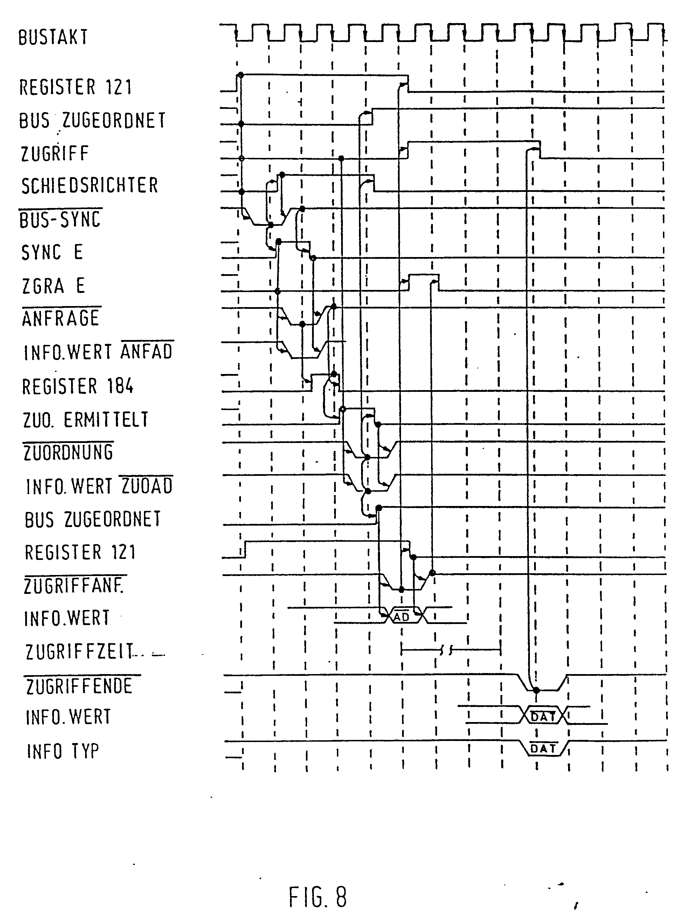

Fig. 8 zeigt, wie ein Lesezugriff abläuft für den Fall, daß der Bus 11 noch nicht zugeordnet ist, aber auch noch kein anderer Speicherzugriff läuft. Im Gegensatz zu dem anhand der Fig. 7 beschriebenen Fall wird also vorausgesetzt, daß der Bus im Ausgangszustand dem hier zu betrachtenden Prozessor bzw. der datenverarbeitenden Einrichtung noch nicht zugeordnet ist.

Fig. 8 zeigt als Voraussetzung gleichfalls wieder den Bustakt, dessen abfallende Flanken aktive Flanken sind, also weitere Signalvorgänge veranlassen. Entsprechend der vorstehenden Voraussetzung wird bei einem Zugriffswunsch das Register 121 ZUGRIFFMERKER gesetzt, während der Status BUS ZUGEORDNET nicht vorliegt. Außerdem ist auch das Signal ZUGRIFF nicht vorhanden, und der Schiedsrichter arbeitet nicht. In diesem Schaltzustand ergibt sich der in Fig. 6 gezeigte Ansteuerfall, der mit der in Fig. 4 gezeigten Schaltung des Generators für die Busanfrage erzeugt wird. Das in Fig. 6 gezeigte UND-Glied 72 wird mit den Signalen ZUGRIFFMERKER, BUS ZUGEORDNET, SCHIEDSRICHTER und ZUGRIFF angesteuert. Das UND-Glied 72 erzeugt dann aufgrund seiner konjunktiven Verknüpfung sein Ausgangssignal BUS SYNC, das durch das NAND-Glied 73 in ein Signal BUS SYNC umgesetzt wird, das im aktiven Zustand den Binärwert Null hat. Dieser Vorgang ist in Fig. 8 für die ersten fünf Signalverläufe anhand der dort angedeuteten logischen Verknüpfung gezeigt. Da das Ausgangssignal des UND-Gliedes 72 in der in Fig. 6 gezeigten Schaltung auch dem D-Eingang der ersten Stufe des Registers 70 zugeführt wird, gibt diese an ihrem Q-Ausgang das Signal SYNCE ab, das in Fig. 8 so gezeigt ist, wie es durch das eigene Signal BUS SYNC veranlaßt wird. Da ein Signal ZUGRIFFANFANG eines anderen Prozessors fehlt, gibt die zweite Stufe des in Fig. 6 gezeigten Registers 70 an ihrem Q-Ausgang kein Signal ZGRA E ab, und in Verbindung mit dem Signal SYNCE erzeugt das NAND-Glied 84 das Informationstypsignal ANFRAGE und das NAND-Glied 85 den Informationswert der eigenen Prozessoradresse als Anfrageadresse ANFAD. Diese beiden Signale werden mit der nächsten abfallenden Flanke des Bustaktes wieder beendet, da das Signal BUS SYNC nur für eine Bustakt-Periode gesendet wird. Fig. 8 zeigt als nächsten Signalverlauf, daß das Signal ANFRAGE innerhalb des Schiedsrichters 18 (Fig. 5) dem Ermittlungszeitregister 184 zugeführt wird. Das Ermittlungszeitregister 184 steuert wiederum die Schaltung 183 des Schiedsrichters 18 an, welche das Ausgangssignal ZUORDNUNG ERMITTELT abgibt. Dieses bewirkt wiederum in Verknüpfung mit dem bereits beschriebenen Signal ZUGRIFF, daß die Zuordnungsadresse ZUOAD auf die Informationswert-Signalleitungen 23 gegeben werden kann. Gleichzeitig wird durch dieselbe Ursache das Signal ZUORDNUNG erzeugt. Beide Signalverläufe sind in Fig. 8 mit dem Binärwert Null im aktiven Zustand dargestellt. Die beiden Signale bewirken dann in dem anfragenden Prozessor die Erzeugung des Statussignals BUS ZUGEORDNET, wozu auf die Schaltung nach Fig. 4 verwiesen wird. Gleichzeitig wird in bereits beschriebener Weise über das in Fig. 5 gezeigte NAND-Glied 126 das Signal ZUGRIFFANFANG erzeugt, welches wiederum das Ende des von dem Register 121 ZUGRIFFMERKER abgegebenen Ausgangssignals zur Folge hat. Über die Informationswert-Signalleitungen 23 kann dann die Speicheradresse für einen Speicherzugriff gesendet werden, die in Fig. 8 wie bereits in Fig. 7 mit AD bezeichnet ist. Es läuft dann entsprechend wieder die Zugriffzeit, an deren Ende die Signale ZUGRIFFENDE und DATUM gesendet werden, mit dem dann über die Informationswert-Signalleitungen 23 wieder ein Lesedatum gesendet werden kann.

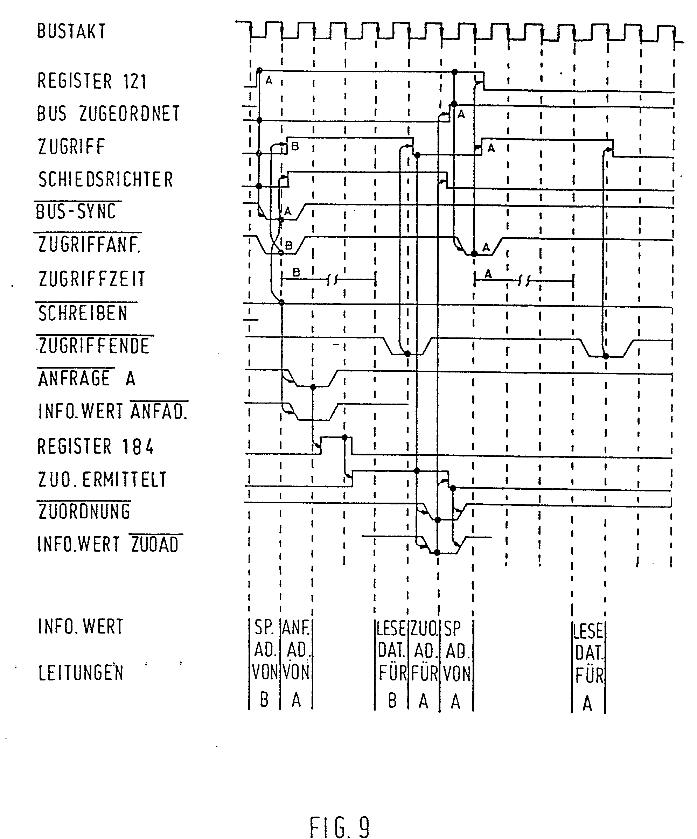

In Fig. 9 ist der Zuordnungsvorgang für einen Lesezugriff einer datenverarbeitenden Einrichtung A dargestellt, wobei vorausgesetzt wird, daß dieser Einrichtung A der Bus noch nicht zugeordnet ist, jedoch eine andere Einrichtung B mit ihrem Lesezugriffbeginnt. Dies bedeutet, daß die Einrichtung B gerade ihr Signal ZUGRIFFANFANG sendet. Veranlaßt durch die Verknüpfung der in Fig. 9 gezeigten ersten vier Signalverläufe, nämlich des Ausgangssignals des Registers 121, des Signals fehlenden Status BUS ZUGEORDNET, des fehlenden Status ZUGRIFF und des fehlenden Status SCHIEDSRICHTER wird in bereits beschriebener Weise in der Einrichtung A das Signal BUS SYNC erzeugt, welches den Status SCHIEDSRICHTER in allen Einrichtungen setzt. Gleichzeitig wird aber das Signal ZUGRIFF durch das Signal ZUGRIFFANFANG der Einrichtung B erzeugt. Es läuft dann die Zugriffzeit für die Einrichtung B, und während dieser Zeit soll nun gemäß Voraussetzung eine Anfrage der Einrichtung A durchgeführt werden.

Abhängig von der Information KEIN SCHREIBEN, die im Oben-Zustand des Signals SCHREIBEN gegeben wird und von dem Signal BUS SYNC wird dann das Signal ANFRAGE der Einrichtung A ausgegeben und gleichzeitig über die Informationswert-Signalleitungen 23 in beschriebener Weise eine Anfrageadresse gesendet. Durch das Signal ANFRAGE der Einrichtung A wird in beschriebener Weise das Register 184 des Schiedsrichters 18 gesetzt und das Signal ZUORDNUNG ERMITTELT ausgegeben. Abhängig von diesem Signal sowie von dem Ende des Signals ZUGRIFF im Schiedsrichter 18 wird dann das Signal ZUORDNUNG an die Einrichtung A ausgegeben und über die Informationswertleitungen 23 die Zuordnungsadresse übermittelt. Fig. 9 zeigt, daß durch diesen Vorgang wiederum das Signal BUS ZUGEORDNET für die Einrichtung A ausgegeben wird und dadurch wiederum das Signal ZUGRIFFANFANG, nun aber für die Einrichtung A erzeugt wird. Anschließend läuft dann eine Zugriffzeit, die in Fig. 9 der Einrichtung A zugeordnet gekennzeichnet ist.

Fig. 9 zeigt in ihrem unteren Teil zur besseren Verdeutlichung der vorstehend beschriebenen Vorgänge, welche Signale über die Informationswert-Signalleitungen in der zeitlichen Folge übertragen werden. Zunächst wird im Rahmen eines Speicherzugriffs eine Speicheradresse von der Einrichtung B zu einer anderen Einrichtung übertragen, darauf folgt eine Anfrageadresse von der Einrichtung A. Während der Zugriffzeit der Einrichtung B ist dann keine Übertragung von Daten möglich, erst an deren Ende werden die Lesedaten an die Einrichtung B übertragen. Anschließend kann eine Zuordnungsadresse für die Einrichtung A übertragen werden, so daß diese dann analog der Einrichtung B eine Speicheradresse abgeben kann. Dann läuft eine Zugriffzeit, an deren Ende die Übertragung von Lesedaten für die Einrichtung A erfolgt.

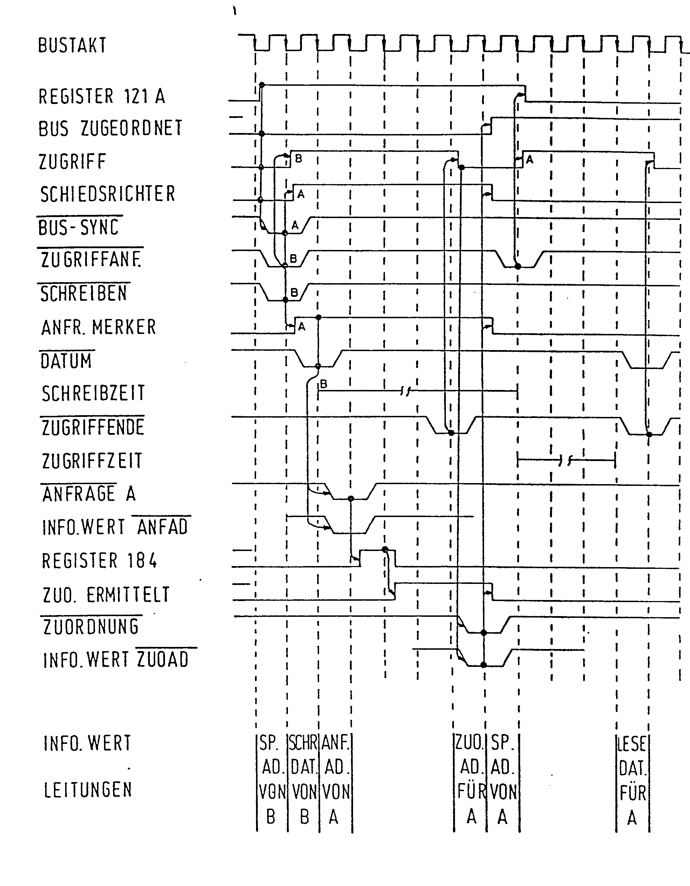

Fig. 10 zeigt einen Zuordnungsvorgang für einen mit einer Einrichtung A durchzuführenden Lesezugriff unter der Voraussetzung, daß der Bus der Einrichtung A noch nicht zugeordnet ist und eine andere Einrichtung B, der der Bus zugeordnet ist, mit ihr einen Schreibzugriff beginnt. Wenn die Einrichtung A einen Zugriffswunsch äußert, so wird das Register 121 dieser Einrichtung A gesetzt, was in Fig. 10 als erster Signalverlauf gezeigt ist. Da der Einrichtung A der Bus noch nicht zugeordnet ist, ist das entsprechende Statussignal BUS ZUGEORDNET nicht vorhanden. Außerdem läuft noch kein Speicherzugriff der Einrichtung B, weshalb das entsprechende Signal ZUGRIFF noch nicht vorhanden ist. Da auch der Schiedsrichter 18 in diesem Zeitpunkt nicht arbeitet, werden, wie bereits anhand der Fig. 9 beschrieben, in der Einrichtung A die Information BUS SYNC und der Status SCHIEDSRICHTER erzeugt. Gleichzeitig wird ein Information- Signal ZUGRIFFANFANG der Einrichtung B zusammen mit dem Information-Signal SCHREIBEN in der Einrichtung B erzeugt, und diese drei Signilzustände haben zur Folge, daß durch die Signale SYNC E und ZGRA E (Fig. 6) gleichzeitig mit dem Beginn des Schreibzugriffs in der Einrichtung A auch der Anfragemerker 79 (Fig. 6) gesetzt wird. Dadurch kann das Schreibdatum vor dem Senden der ANFRAGE gesendet werden, womit für die Einrichtung B die Schreibzeit beginnt und der vorausgesetzte Schreibzugriff zu einer anderen Speichereinrichtung ablaufen kann. Das Informationstyp-Signal DATUM und der gesetzte Anfragemerker veranlassen anschließend das Senden des Informationstyps ANFRAGE und der Anfrageadresse ANFAD in der Einrichtung A. Mit dem Signal ZUGRIFFENDE wird dann das Statussignal ZUGRIFF in dem Schiedsrichter 18 beendet, wodurch er wiederum der Einrichtung A, die ein Anfragesignal abgegeben hat, das Signal ZUORDNUNG und über die Informationswert-Signalleitungen 23 die Zuordnungsadresse ZUOAD senden kann, die inzwischen von dem Schiedsrichter 18 ermittelt wurde. Damit wird das Signal ZUORDNUNG ERMITTELT im Schiedsrichter 18 beendet, das Signal ZUGRIFF-ANFANG im Schiedsrichter 18 und in der Einrichtung A gesetzt und das Signal ZUGRIFF für die Einrichtung A veranlaßt. Es läuft dann in dem Speicher eine Zugriffzeit ab, nach deren Ablauf das Signal ZUGRIFFENDE erscheint und ein Lesedatum gesendet werden kann.

Im unteren Teil zeigt Fig. 10 die zeitliche Aufeinanderfolge der Signale, die über die Informationswert-Signalleitungen 23 übertragen werden. Es handelt sich dabei zunächst um eine Speicheradresse, die von der Einrichtung B gesendet wird, worauf diese dann ein Schreibdatum zu einem derart angesteuerten Speicher transportiert. Im nächstfolgenden Taktintervall tritt eine Anfrageadresse der Einrichtung A auf, wonach die Zuordnung im Schiedsrichter 18 durchgeführt wird. Am Ende dieser Zuordnung wird eine Zuordnungsadresse an die Einrichtung A ausgegeben, nachdem der Schiedsrichter 18 vom Speicher die Information ZUGRIFFENDE erhält, die wiederum eine Speicheradresse abgibt, um einen Speicher mit einem Lesezugriff zu belegen. Darauf folgt die Zugriffzeit des Speichers, worauf dann wiederum Lesedaten aus dem derart angesteuerten Speicher an die Einrichtung A übermittelt werden.

Für die vorstehende Erläuterung der Figuren 7 bis 10 wurde folgende prinzipielle Arbeitsweise vorausgesetzt:

Die Informationswertsignale werden von dem jeweils aktiven Prozessor bzw. von einer adressierten datenverarbeitenden Einrichtung bei einem Datenübertragungsvorgang synchron mit den Bustaktsignalen abgegeben.

Eine adressierte datenverarbeitende Einrichtung sendet die Information ZUGRIFFENDE und gegenbenenfalls das Informationstypsignal DATUM zusammen mit dem Informationswertsignal DATUM. Dieser Vorgang wird im folgenden für einen Speicher erläutert.

Der Speicher wird bei einem Lesezugriff mit Auftreten des Information-Signals ZUGRIFFANFANG gestartet. Nach Ende der Zugriffzeit sendet der Speicher für eine Bustaktperiode die Information-Signale ZUGRIFFENDE und DATUM sowie das Informationswertsignal DATUM.

Der Speicher wird bei einem Schreibzugriff mit den Information-Signalen ZUGRIFFANFANG und SCHREIBEN darauf vorbereitet, daß eine einzuschreibende Information folgt. Diese setzt sich zusammen aus dem Informationstypsignal DATUM und dem Informationswertsignal DATUM. Diese beiden Signale müssen nicht unbedingt mit der ersten Bustaktperiode nach dem Signal ZUGRIFFANFANG auftreten. Nach Übertragung der einzuschreibenden Daten beginnt die Schreibzeit. Abhängig von den physikalischen Eigenschiften des Speichers wird mindestens drei Bustaktperioden vor dem Ende der Schreibzeit dis Signal ZUGRIFFENDE vom Speicher abgegeben. Diese drei Bustaktperioden werden benötigt für die Übertragung der Signale ZUGRIFFENDE und ZUORDNUNG sowie der Adresse für den nächsten Zugriff.

Bei den Darstellungen gemäß Fig. 9 und 10 werden die Signale BUS SYNC und ANFRAGE sowie das Informationswertsignal ANFAD begonnen und beendet wie in Fig. 8, nämlich durch Steuerung mittels der Signale SYNC E und ZGRA E.

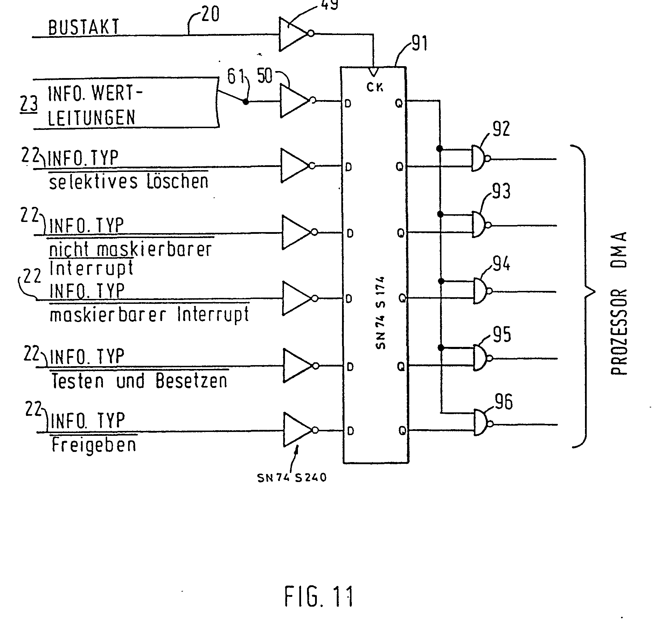

Fig. 11 zeigt eine sehr einfache schaltungstechnische Erweiterung der Anordnungen, die anhand der Figuren 4 und 6 bereits erläutert wurden. Der dort beschriebene mechanische Umschalter 61 ist auch in Fig. 11 dargestellt und über einen invertierenden Empfänger mit einem D-Eingang eines Empfangsregisters 91 vom Typ SN 74 S 174 verbunden. Der invertierende Empfänger kann beispielsweise der in Fig. 4 gezeigte Empfänger 50 sein.

Das Register 91 ist ein einflankengesteuertes Register und wird durch den Bustakt über die Bustakt-Signalleitung getaktet, wobei ein invertierender Empfänger zwischengeschaltet ist, der beispielsweise der Empfänger 49 nach Fig. 4 ist. Der mechanische Schalter 61 kann die Schaltungen nach Fig. 4, 6 und 11 untereinander verbinden, wodurch gleichfalls erkennbar wird, daß die über ihn fest zugeteilten Informationswert-Signalleitungen 23 mehrfach ausgenutzt werden können.

Wie bereits erläutert, können die fest zugeteilten Informationswert-Signalleitungen 23 dazu benutzt werden, in Zeitabschnitten, in denen keine Anfragesignale bzw. Zuordnungssignale übertragen werden, einen oder mehrere Prozessoren direkt, d.h. ohne Dekodierungsaufwand, zu adressieren. Auf diese Weise können mit direkt adressierten Prozessoren unter Anwendung eines mit der Erfindung verwirklichten Schaltungsprinzips Arbeitsgänge durchgeführt werden, zu denen bisher entweder besonderer Dekodierungsaufwand oder aber besondere zusätzliche Signalleitungen erforderlich waren. Fig. 11 zeigt in Verbindung mit weiteren D-Eingängen des Registers 91 zusätzliche einzelne Signalleitungen, die als Informationstyp-Signalleitungen 22 benutzt sind und bei Berücksichtigung des Vorteils der direkten Adressierung des jeweiligen Prozessors einen äußerst geringen zusätzlichen Aufwand darstellen. Gemäß der Kennzeichnung dieser zusätzlichen Signalleitungen kann eine über die Informationswert-Signalleitung 23 einem Prozessor zugeführte Adresse so gekennzeichnet werden, daß beispielsweise ein selektives Löschen, ein Interrupt-Betrieb, und zwar ein maskierbarer oder nicht maskierbarer Interrupt-Betrieb, oder aber ein Test- und Besetzt-Betrieb zur Zuordnung von Betriebsmitteln wie beispielsweise Druckern oder Sichtgeräten, durchgeführt wird. Im letzteren Anwendungsfall ist ein zusätzlicher Eingang zur Freigabe der Betriebsmittel vorgesehen.

Mit den Q-Ausgängen des Registers 91 sind entsprechend den Informationstyp-Eingangssignalen bei Empfang der jeweils richtigen Adresse aktivierbare NAND-Glieder 92 bis 96 verbunden, die das von ihnen durchzuschaltende Signal jeweils dem zugeordneten Prozessor bzw. einer datenverarbeitenden Einrichtung zuführen.

**Patentansprüche**

1. Verfahren zur Vorbereitung der Anschaltung einer von mehreren datenverarbeitenden Einrichtungen an ein zentral taktgesteuertes Mehrfach-Leitungssystem (Bus) zwecks Übertragung von Informationssignalen zwischen den datenverarbeitenden Einrichtungen, bei dem die Einrichtungen mit Anschalteerfordernis Anfragesignale über das Mehrfach-Leitungssystem an mindestens eine Zuordnungseinrichtung (Schiedsrichter) abgeben und diese mittels von ihr erzeugter Zuordnungssignale die Anschaltung einer der Einrichtungen mit Anschalteerfordernis an das Mehrfach-Leitungssystem veranlaßt, wonach diese Einrichtung Informationssignale zu einer anderen Einrichtung überträgt, und bei dem die Zuordnungseinrichtung während der Übertragung von Informationssignalen die Zuordnungssignale erzeugt, dadurch gekennzeichnet, daß die Anfragesignale während einer bereits bestehenden Verbindung in solchen Zeitabschnitten übertragen werden, in denen über das Mehrfach-Leitungssystem keine Informationssignale übertragen werden auf Grund von Lese- und/oder Schreibvorgängen in Speichern der datenverarbeitenden Einrichtungen, und daß die Zuordnungssignale in Zeitabschnitten dieser Art und/oder während der Übertragung gelesener Informationssignale erzeugt werden.

2. Verfahren nach Anspruch 1, dadurch gekennzeichnet, daß die Anfragesignale und ggf. die Zuordnungssignale über der jeweils anfragenden Einrichtung fest zugeteilte Signalleitungen des Mehrfach-Leitungssystems übertragen werden.

3. Verfahren nach Anspruch 1 oder 2, dadurch gekennzeichnet , daß während eines Lesevorgangs ein die Zugriffzeit des betreffenden Speichers angebendes Statussignal erzeugt wird, das als Bedingung für die Übertragung der Anfragesignale benutzt wird.

4. Verfahren nach einem der vorhergehenden Ansprüche, dadurch gekennzeichnet, daß die Periodendauer der zentralen Taktsignale der Übertragungszeit über das Mehrfach-Leitungssystem entspricht, daß die übertragenen Anfragesignale in synchron ladbare, einflankengesteuerte Empfangsregister eingegeben werden, daß die Flanken der Taktsignale diese Eingabe bestimmen und daß die Steuersignale für diese Eingabe auf die Ladeeingänge der Empfangsregister geführt werden.

5. Verfahren nach Anspruch 4, dadurch gekennzeichnet, daß nur die Taktsignalleitung des Mehrfach-Leitungssystems als eine abgeschlossene Leitung betrieben wird.

6. Verfahren nach einem der vorhergehenden Ansprüche, dadurch gekennzeichnet, daß von einer EEinrichtung mit Anschalteerfordernis bei noch keiner anderen Einrichtung zugeordnetem Mehrfach-Leitungssystem vor den Anfragesignalen eine Vorinformation auf eine besondere Informations-Leitung des Mehrfach-Leitungssystems abgegeben wird, die an allen zu dem Mehrfach-Leitungssystem gehörenden datenverarbeitenden Einrichtungen ein die Zuordnung kennzeichnendes Statussignal hervorruft, welches in der Einrichtung mit Anschalteerfordernis die Ausgabe der Anfragesignale veranlaßt.

7. Verfahren nach Anspruch 6, dadurch gekennzeichnet, daß die Vorinformation auch zur Vorbereitung einer Zuordnungseinrichtung auf den Empfang der Anfragesignale genutzt wird.

8. Verfahren nach Anspruch 6 oder 7, dadurch gekennzeichnet, daß die Vorinformation aus Statussignalen abgeleitet wird, welche in den Einrichtungen mit Anschalteerfordernis die fehlende Zuordnung des Mehrfach-Leitungssystems, den Ruhezustand der Zuordnungseinrichtung und das Fehlen eines Zugriffszustandes iuf dem Mehrfach-Leitungssystem kennzeichnen und mit einem das Anschalteerfordernis signalisierenden Zugriffsmerker verknüpft werden.

9. Verfahren nach einem der vorhergehenden Ansprüche, dadurch gekennzeichnet, daß in der Zuordnungseinrichtung bei Empfang der Anfragesignale eine Ermittlungszeit gestartet wird, während der die Zuordnungssignale aufgrund einer Zuordnungsermittlung erzeugt werden und bei deren Ablauf ein die ermittelte Zuordnung kennzeichnendes Statussignal zusammen mit den Zuordnungssignalen auf das Mehrfach-Leitungssystem gegeben wird, und daß dieses Statussignal in der anfragenden datenverarbeitenden Einrichtung den Zugriff zu einer anderen datenverarbeitenden Einrichtung über das Mehrfach-Leitungssystem veranlaßt.

10. Verfahren nach Anspruch 2, dadurch gekennzeichnet, daß die fest zugeteilten Signalleitungen für die Übertragung der Anfragesignale auch zur Übertragung von Informationssignalen, insbesondere Adressensignalen, genutzt werden, die der direkten Ansteuerung von datenverarbeitenden Einrichtungen dienen.

**Claims**

1. A method of preparing the connection of one of a plurality of data-processing devices to a centrally clock-controlled multiple line system (bus) for the purpose of transmitting information signals between the data-processing devices, in which method the devices requiring to be connected deliver request signals via the multiple line system to at least one allocator (arbiter) which, by means of allocation signals it generates, causes one of the data-processing devices requiring connection to be connected to the multiple line system, whereupon said data-processing device transmits information signals to another data-processing device, the allocator generating the allocation signals during the transmission of information signals, characterised in that the request signals are transmitted during an existing connection at times when no information signals are being transmitted via the multiple line system due to read-out and/or write-in operations in memories of the data-processing devices, and the allocation signals are generated during times of this kind and/or during the transmission of read-out information signals.

2. A method according to claim 1, characterised in that the request signals and, if required, the allocation signals are transmitted via signal lines in the multiple line system permanently associated with whichever of the data-processing devices is making the request.

3. A method according to claim 1 or 2, characterised in that a status signal indicating the access time of the memory in question is generated during a read-out operation and is used as a condition for the transmission of the request signals.

4. A method according to any one of the preceding claims, characterised in that the cycle time of the central clock signals corresponds to the transmission time via the multiple line system; the transmitted request signals are input into synchronously chargeable single-flank controlled receiving registers; the flanks of the clock signals define this inputting; and the control signals for this inputting are fed to the charging inputs of the receiving registers.

5. A method according to claim 4, characterised in that only the clock signal line of the multiple line system is operated as a terminated line.

6. A method according to any one of the preceding claims, characterised in that if the multiple line system has not yet been allocated to any other data-processing device, a data-processing device requiring to be connected delivers preliminary information on a special information line of the multiple line system, before transmitting the request signals, such preliminary information generating a status signal indicative of the allocation, such status signal being delivered to all the data-processing devices belonging to the multiple line system, such status signal causing the request signals to be transmitted at the data-processing device requiring to be connected.

7. A method according to claim 6, characterised in that the preliminary information is also utilized to prepare an allocator for the receipt of the request signals.

8. A method according to claim 6 or 7, characterised in that the preliminary information is derived from status signals which, in those data-processing devices requiring to be connected, indicate the lack of allocation of the multiple line system, the inoperative state of the allocator, and the absence of an access condition on the multiple line system, and are combined with an access marker indicating the connection requirement.

9. A method according to any one of the preceding claims, characterised in that a determination time is started in the allocator on receipt of the request signals, during which time the allocation signals are generated on the basis of an allocation determination and, on expiry thereof, a status signal indicating the allocation as determined is delivered over the multiple line system together with the allocation signals; and in the data-processing device making the request the said status signal causes access to another data-processing device via the multiple line system.

10. A method according to claim 2, characterised in that the permanently associated signal lines for the transmission of the request signals are also utilized for the transmission of information signals, more particularly address signals, which are used for directly controlling data-processing devices.


## Revendications

1. Procédé pour la préparation de la connexion de l'une de plusieurs unités de traitement de données à un système de lignes multiples (bus) à commande centrale d'horloge, en vue de la transmission de signaux d'information entre les unités de traitement de données, suivant lequel les unités demandantes d'être connectées transmettent des signaux d'interrogation par l'intermédiaire du système de lignes multiples à au moins un dispositif d'affectation (arbitre) et ce dernier provoque par des signaux d'affectation qu'il émet la connexion de l'une des unités demandantes d'être connectées au système de lignes multiples, après quoi cette unité transmet des signaux d'information à une autre unité, et selon lequel le dispositif d'affectation émet les signaux d'affectation pendant la transmission des signaux d'information, caractérisé en ce que, pendant une liaison déjà établie, les signaux d'interrogation sont transmis pendant les intervalles de temps au cours desquels aucun signal d'information n'est transmis par le système de lignes multiples par suite d'opérations de lecture et/ou d'écriture dans les mémoires des unités de traitement de données, et les signaux d'affectation sont émis pendant des intervalles de temps du même genre et/ou pendant la transmission de signaux d'information lus.

2. Procédé selon la revendication 1 caractérisé en ce que les signaux d'interrogation et éventuellement les signaux d'affectation sont transmis par des lignes de signaux du système de lignes multiples affectées de manière fixe à l'unité devenue interrogatrice.

3. Procédé selon la revendication 1 ou 2 caractérisé en ce que, pendant une opération de lecture, il est émis un signal d'état qui indique le temps d'accès à la mémoire concernée et qui est utilisé comme condition à la transmission des signaux d'interrogation.

4. Procédé selon l'une quelconque des revendications précédentes, caractérisé en ce que la durée de la période des signaux d'horloge centraux correspond à la durée de transmission par le système de lignes multiples, les signaux d'interrogation transmis sont introduits dans des registres de réception à commande par un flanc, à chargement synchrone, les flancs des signaux d'horloge déterminent cette entrée et les signaux de commande de cette entrée sont dirigés sur les entrées de chargement des registres de réeception.

5. Procédé selon la revendication 4 caractérisé en ce que seule la ligne des signaux d'horloge est utilisée comme ligne fermée.

6. Procédé selon l'une quelconque des revendications précédentes caractérisé en ce que, à partir d'une unité demandante d'être connectée, quand encore aucune unité n'a été· attribuée au système de lignes multiples, avant les signaux d'interrogation une information préalable est émise sur une ligne d'information particulière du système de lignes multiples, cette information faisant apparaître à toutes les unités de traitement de données appartenant au système de lignes multiples un signal d'état caractérisant l'attribution, qui provoque dans l'unité demandante d'être connectée la sortie des signaux d'interrogation.

7. Procédé selon la revendication 6 caractérisé en ce que l'information préalable est utilisée aussi également pour la préparation d'un dispositif d'attribution à l'arrivée des signaux d'interrogation.

8. Procédé selon la revendication 6 ou 7 caractérisé en ce que l'information préalable est dérivée de signaux d'état qui caractérisent dans les unités demandantes d'être connectées l'absence d'attribution du système de lignes multiples, l'état de repos du dispositif d'attribution et l'absence d'un état d'accès sur le système de lignes multiples, et qui sont combinés avec un indicateur d'accès signalant la demande d'être connecté.

9. Procédé selon l'une quelconque des revendications précédentes, caractérisé en ce que, dans le dispositif d'attribution à la réception des signaux d'interrogation est déclenché un délai de détermination pendant lequel sont émis les signaux d'attribution en fonction d'une détermination d'attribution et à l'expiration duquel un signal d'état caractérisant l'attribution déterminée est transmis en même temps que les signaux d'attribution au système de lignes multiples, et ce signal d'état provoque dans l'unité de traitement de données interrogatrice l'accès à une autre unité de traitement de données par l'intermédiaire du système à lignes multiples.

10. Procédé selon la revendication 2 caractérisé en ce que les lignes de signaux affectées de manière fixe pour la transmission des signaux d'interrogation sont utilisées aussi pour la transmission de signaux d'information particulièrement de signaux d'adresse, qui servent à la commande directe des unités de traitement de données.

FIG. 1

FIG. 2

BUSTAKT — 17

20 BUSTAKTSIGNALLEITUNG

+V    +V

12    13

30    31

34    35
SIGNALLEITUNG
INFORMATIONSTYP    22
D  CK  Q
SN74S74    40    40    LOAD  CK
32    Q    SN74S163
+V    33

36    37
SIGNALLEITUNGEN
INFORMATIONSWERT    23    D    Q
41    41
+V    +V

SIGNALSENDER    SIGNALEMPFÄNGER

0 104 638

ω

FIG. 4

5

FIG. 5

FIG. 6

INFO BUS-SYNC

73 SN 74 S38

72

ZUGRIFFSMERKER 121, FIG. 5

BUS ZUGEORDNET 62, FIG. 4

SCHIEDSRICHTER 63, FIG. 4

ZUGRIFF 64, FIG. 4

BUS-TAKT

SN 74 S10

74

ANFRAGE MERKER

SN74 S00

79

SN74S240

75

INFO ZUGRIFFANFANG

21

INFO SCHREIBEN 76

77

INFO TYP ZUORDNUNG

22

INFO TYP DATUM 78

CK 70 Q Q

D

D

D

D

CK 71 Q Q

SN74S175

SYNC E

ZGRA E

SCHR E

SN 74 S10

LÖSCHEN 65

INFO TYP ANFRAGE

22

80

81

LAUFENDER SCHREIBZUGRIFF

90

INFO.WERT LEITUNGEN

61

23

82

83

KEIN LAUFENDER SCHREIBZUGRIFF

84

85

KEIN LAUFENDER ZUGRIFF

61, FIG.4

FIG.11

SN74S38

FIG.6

9

0 104 638

| BUSTAKT | | 1 | | 2 | | 3 | | 4 | |...|
|---------|---|---|---|---|---|---|---|---|---|

| INFO.WERT LEITUNGEN | SPEICHER ADRESSE | ANFRAGE ADRESSE | LESE- DATEN | ZUORDNUNGS- ADRESSE |
|---|---|---|---|---|

ZUGRIFFZEIT     SCHIEDSRICHTER- ZEIT

## FIG. 3

BUSTAKT

REGISTER 121

BUS ZUGEORDN.

$\overline{\text{ZUGRIFFANF.}}$

INFO. WERT          $\overline{A D}$          $\overline{\text{DATUM}}$

ZUGRIFFZEIT

$\overline{\text{ZUGRIFFENDE}}$

INFO TYP          $\overline{\text{DATUM}}$

## FIG. 7

11

0 104 638

BUSTAKT

REGISTER 121

BUS ZUGEORDNET

ZUGRIFF

SCHIEDSRICHTER

BUS-SYNC

SYNC E

ZGRA E

ANFRAGE

INFO.WERT ANFAD

REGISTER 184

ZUO. ERMITTELT

ZUORDNUNG

INFO. WERT ZUOAD

BUS ZUGEORDNET

REGISTER 121

ZUGRIFFANF.

INFO.WERT

ZUGRIFFZEIT

ZUGRIFFENDE

INFO.WERT

INFO TYP

FIG. 8

13

BUSTAKT

REGISTER 121

BUS ZUGEORDNET

ZUGRIFF

SCHIEDSRICHTER

$\overline{\text{BUS-SYNC}}$

$\overline{\text{ZUGRIFFANF.}}$

ZUGRIFFZEIT

$\overline{\text{SCHREIBEN}}$

$\overline{\text{ZUGRIFFENDE}}$

$\overline{\text{ANFRAGE}}$ A

INFO.WERT $\overline{\text{ANFAD.}}$

REGISTER 184

ZUO. ERMITTELT

$\overline{\text{ZUORDNUNG}}$

INFO.WERT $\overline{\text{ZUOAD}}$

INFO. WERT

LEITUNGEN

| SP. | ANF. | | LESE | ZUO. | SP | | LESE |
| AD. | AD. | | DAT. | AD. | AD. | | DAT. |
| VON | VON | | FÜR | FÜR | VON | | FÜR |
| B | A | | B | A | A | | A |

FIG. 9

15

FIG. 10

FIG. 11